# EUROPÄISCHE PATENTSCHRIFT

(11) **EP 3 473 689 B1**
(45) Veröffentlichungstag und Bekanntmachung des Hinweises auf die Patenterteilung: **18.03.2026**
(21) Anmeldenummer: 18199441.9
(22) Anmeldetag: 09.10.2018
(51) Int. Cl.: C09J 7/10, C09J 153/02, B29B 7/00, B29B 7/48, B29B 7/84, B29C 48/39, B29C 48/44, B29C 48/76

(54) **HÄRTBARER HAFTKLEBESTREIFEN AUF BASIS VON VINYLAROMATENBLOCKCOPOLYMER**
CURABLE ADHESIVE TAPE BASED ON VINYL AROMATICS BLOCK COPOLYMER
BANDES ADHÉSIVES DURCISSABLES À BASE DE COPOLYMÈRE EN BLOC VINYLE AROMATIQUE

(30) Priorität: 17.10.2017 DE 102017218519
(43) Veröffentlichungstag der Anmeldung: 24.04.2019
(73) Patentinhaber: tesa SE, 22848 Norderstedt (DE)
(72) Erfinder: GARBERS, Julia, 22159 Hamburg (DE); SCHUBERT, Thomas, 22769 Hamburg (DE); PAPENBROOCK, Marten, 22417 Hamburg (DE); MAYER, Michael, 20259 Hamburg (DE); LUNDING, Marta, 22844 Norderstedt (DE)
(74) Vertreter: tesa SE

(56) Entgegenhaltungen:
- EP-A1- 3 336 153
- WO-A1-02/34854
- WO-A1-2017/137386
- WO-A1-2019/020363
- DE-A1- 102015 220 075
- ANONYMOUS: "Kraton D1184 K Polymer Data Document", 1 January 2021 (2021-01-01), pages 1 - 2, XP055949089, Retrieved from the Internet <URL:https://kraton.com/products/pdsDocs/polymer/D1184K.pdf> [retrieved on 20220804]
- K S TAN ET AL: "Some Studies on the Effect of Solvents in ENR 60 Gel Content Measurements", JOURNAL OF RUBBER RESEARCH, 1 January 2003 (2003-01-01), pages 189 - 194, XP055731356, [retrieved on 20200916]

## Beschreibung

Die Erfindung betrifft einen Haftklebestreifen auf Basis von Vinylaromatenblockcopolymer, der sich durch Elektronenstrahlen härten lässt und der insbesondere zur Verklebung von Bauteilen mit einer unpolaren Oberfläche geeignet ist.

Klebstoffe und Klebebänder werden im Allgemeinen verwendet, um zwei Substrate zusammenzufügen, so dass eine dauerhafte oder permanente Verbindung entsteht. Trotz einer Vielzahl an Klebstoffen und Klebebändern ist aufgrund von neuartigen Substraten sowie steigenden Anforderungen bei der Endanwendung die Notwendigkeit gegeben, neue Haftklebemassen, Formulierungen und Klebebanddesigns zu entwickeln. So hat sich herausgestellt, dass gerade neue Bauteile im Innenbereich von Automobilen, auf denen Klebebänder temporär oder permanent haften sollen, kritische Oberflächen sind und eine Herausforderung für die Verklebung darstellen. Aufgrund der niedrigen Oberflächenenergie dieser Bauteile werden speziell für diese Anwendungen entwickelte Klebebänder benötigt.

Weiterhin steigt die Verwendung von Klebebändern aufgrund des fortlaufenden Trends im Transportsektor und insbesondere in der Automobilindustrie, das Gewicht zum Beispiel eines Autos weiter zu verringern und somit den Kraftstoffverbrauch zu reduzieren. Dies führt dazu, dass Klebebänder für Anwendungen verwendet werden, für die bisherige Klebebandprodukte nicht vorhergesehen und entwickelt waren, und es kommen zusätzlich zu der mechanischen Belastung und den für Klebeanwendungen kritischen Haftuntergründen auch noch steigende Anforderungen gerade für permanente Verklebungen hinsichtlich der UV- und Bewitterungsstabilität.

Folglich existiert die Anforderung an ein Klebebandprodukt, zum einen eine verbesserte Haftung auf niedrigenergetischen Oberflächen aufzuweisen und zum anderen auch unter extremen klimatischen Bedingungen ein hervorragendes Leistungsprofil zu bewahren. Insbesondere eine ausreichende Kohäsion auch bei hohen Temperaturen wird bei permanenten Außenverklebungen (Embleme, Stoßdämpfer), aber auch bei permanenten Innenverklebungen (Türen) von der Automobilindustrie gefordert.

Zusätzlich muss das Klebeband auch den Herstellungsprozessen gerecht werden. Aufgrund fortschreitender Automatisierung von Produktionsprozessen sowie des Wunsches nach ökonomischeren Fertigungsweisen muss das Klebeband, sobald es an der richtigen Stelle platziert ist, schnell eine genügend hohe Adhäsion aufweisen und teilweise auch bereits zu diesem Zeitpunkt hohe Scherkräfte aushalten. Hierzu ist es von Vorteil, wenn die Klebebänder einen hohen Tack zeigen und die Klebemassen auf diversen Untergründen schnell aufließen, so dass in kürzester Zeit eine gute Benetzung und somit hohe Klebkräfte erreicht werden.

Da gerade der letzte Punkt, nämlich eine Tendenz zum schnellen Auffließen auf diversen Oberflächen, und somit das schnelle Erreichen konstanter Klebkräfte, schwer mit harzmodifizierten Acrylat- oder Reinacrylathaftklebemassen erreichbar ist, werden stattdessen häufig Synthesekautschuke oder Blends mit Synthesekautschuken als geeignete Materialien zur Verklebung auf unpolaren Oberflächen beschrieben. Die EP 0 349 216 A1 und EP 0 352 901 A1 beschreiben zweiphasige Blends bestehend aus einem Polyacrylat und einem Synthesekautschuk, bevorzugt einem Styrolblockcopolymer, welche besonders für die Verklebung auf Farben und Lacken ausgelobt werden. Mehrphasige Blendsysteme können jedoch den Nachteil aufweisen, dass sich die Morphologie des Blends über die Zeit und/oder mit steigender Temperatur ändern kann, was sich in einer makroskopischen Änderung der Polymer- beziehungsweise Produkteigenschaft äußert. Weiterhin kann es im Extremfall zu einer kompletten Entmischung der Polymerkomponenten kommen, und einige Blendkomponenten können sich mit der Zeit an Oberflächen anreichern, wodurch sich die Adhäsion ändern kann. Da generell ein großer Aufwand betrieben werden muss, zum Beispiel durch den Einsatz von Kompatibilisatoren wie in der US 6,379,791 A offenbart, um thermisch und langzeitstabile Blends für Klebeanwendungen herzustellen, sind diese Blendsysteme nicht von Vorteil.

Die EP 2 226 369 A1 beschreibt ein Klebeband, welches einen viskoelastischen Acrylatschaumträger aufweist, der mit mindestens einer Haftklebemasseschicht kaschiert ist. Die Haftklebemasse basiert auf einem chemisch vernetzten Kautschuk, bevorzugt einem mittels Elektronenstrahlhärtung vernetzten Synthesekautschuk. Die dort beschriebenen Klebebänder zeigen sowohl gute Klebkräfte auf verschiedenen Farb- und Lackschichten als auch eine ausreichende Kohäsion bei hohen Temperaturen. Doch zeigt sich eindeutig, dass diese Klebebänder ein stark ausgeprägtes Aufziehverhalten zeigen, wodurch die geforderten hohen Endfestigkeiten erst nach einigen Tagen erreicht werden. Somit ist ein solches Klebeband nicht für schnelle Herstellprozesse geeignet.

EP 2832780 A1 betrifft einen Haftklebemasseschaum, der ein elastomeres Material auf Basis von Kautschuk, mindestens ein Kohlenwasserstoffklebharz und mindestens ein Vernetzeradditiv enthält, das aus der Gruppe der multifunktionellen (Meth)Acrylatverbindungen ausgewählt ist. EP 2832779 A1 betrifft einen Haftklebemasseschaum, der ein elastomeres Material auf Basis von Kautschuk und mindestens ein Kohlenwasserstoffklebharz mit einem Volatile Organic Compound (VOC)-Wert von weniger als 1000 ppm und einem (Volatile Fogging Coumpound (FOG)-Wert von weniger als 1500 ppm enthält. US 2014/0234612 A1 betrifft ein Haftklebeband mit einem acrylischen Schaumträger und Klebeschichten auf Kautschukbasis auf beiden Seiten des Trägers, die einen Gelanteil von 40% oder mehr aufweisen.

WO 00/06637 A1 betrifft einen Artikel, der einen Polymerschaum mit einer im Wesentlichen glatten Oberfläche mit einem Rₐ-Wert von weniger als 75 Mikrometern enthält, wobei der Schaum eine Vielzahl an Mikrokugeln enthält, von denen mindestens eine eine expandierbare polymere Mikrokugel ist.

Geschäumte Haftklebemassensysteme sind seit längerem bekannt und im Stand der Technik beschrieben. Sie besitzen beispielsweise geringere Dichten als vergleichbare ungeschäumte Systeme und zeichnen sich typischerweise durch eine zerstörungsfreie Wiederablösbarkeit und Repositionierbarkeit aus. Grundsätzlich lassen sich Polymerschäume auf zwei Wegen herstellen. Zum einen durch die Einwirkung eines Treibgases, sei es als solches zugesetzt oder aus einer chemischen Reaktion resultierend, zum anderen durch die Einarbeitung von Hohlkugeln in die Werkstoffmatrix. Schäume, die auf letzterem Wege hergestellt werden, werden als syntaktische Schäume bezeichnet. Bei einem syntaktischen Schaum sind Hohlkugeln wie Glaskugeln oder keramische Hohlkugeln (Mikrokugeln) oder Mikroballons in einer Polymermatrix eingebunden. Dadurch sind bei einem syntaktischen Schaum die Hohlräume voneinander getrennt und die in den Hohlräumen befindlichen Substanzen (Gas, Luft) durch eine Membran von der umgebenden Matrix abgetrennt. Mit Mikrohohlkugeln geschäumte Massen zeichnen sich durch eine definierte Zellstruktur mit einer gleichmäßigen Größenverteilung der Schaumzellen aus. Mit Mikrohohlkugeln werden geschlossenzellige Schäume ohne Kavitäten erhalten, die sich im Vergleich zu offenzelligen Varianten unter anderem durch eine bessere Abdichtungswirkung gegen Staub und flüssige Medien auszeichnen. Darüber hinaus sind chemisch oder physikalisch geschäumte Materialien anfälliger für ein irreversibles Zusammenfallen unter Druck und Temperatur und zeigen häufig eine niedrigere Kohäsionsfestigkeit. Besonders vorteilhafte Eigenschaften lassen sich erzielen, wenn als Mikrokugeln zur Schäumung expandierbare Mikrokugeln (auch als "Mikroballons" bezeichnet) eingesetzt werden. Durch ihre flexible, thermoplastische Polymerschale besitzen derartige Schäume eine höhere Anpassungsfähigkeit als solche, die mit nicht expandierbaren, nicht polymeren Mikrohohlkugeln (beispielsweise Glashohlkugeln) gefüllt sind. Sie eignen sich besser zum Ausgleich von Fertigungstoleranzen, wie sie zum Beispiel bei Spritzgussteilen die Regel sind, und können aufgrund ihres Schaumcharakters auch thermische Spannungen besser kompensieren.

DE 10 2008 004 388 A1 betrifft eine Haftklebemasse, die expandierte Mikroballons enthält, wobei die Klebkraft der die expandierten Mikroballons enthaltende Klebemasse im Vergleich zu der Klebkraft einer flächengewichts- und rezepturidentischen Klebemasse, die durch die Zerstörung der durch die expandierten Mikroballons entstandenen Hohlräume entschäumt ist, um höchstens 30%, bevorzugt höchstens 20%, besonders bevorzugt 10% reduziert ist.

DE 10 2012 212 879 A1 betrifft eine Haftklebemasse mindestens zu 70 Gew.-%, vorzugsweise zu 80 Gew.-% enthaltend ein Gemisch aus
(i) Blockcopolymeren aus einer Mischung aus Blockcopolymeren mit der Struktur I und II
   I) A'-B'
   II) A-B-A, (A-B)ₙ, (A-B)ₙX und/oder (A-B-A)ₙX, wobei
      - X der Rest eines Kopplungsreagenzes ist,
      - n eine ganze Zahl zwischen 2 und 10 ist,
      - A und A' ein Polymerblock aus einem Vinylaromaten ist,
      - B und B' ein Polymerblock ist, gebildet aus Butadien, einem Gemisch aus Butadien und Isopren und/oder einem Gemisch aus Butadien und Styrol und
      - A und A' beziehungsweise B und B' gleich oder unterschiedlich sein können,
(ii) mindestens ein Klebharz,

wobei der Anteil der Blockcopolymere I) zwischen 30 und 70 Gew.-% bezogen auf die Gesamtmenge an Blockcopolymeren ist,
wobei der Anteil A bei den Blockcopolymeren II) zwischen 25 und 40 Gew.-% liegt, und wobei die A-B-Einheit innerhalb von zumindest einem der Vinylaromatenblockcopolymere der Struktur II ein Molekulargewicht M_{w} von größer 65.000 g/mol aufweist und das Molekulargewicht M_{w} des gesamten Blockcopolymeren II größer als 130.000 g/mol ist.

DE 10 2012 212 883 A1 betrifft ein Klebeband mit einem Trägermaterial aus einer acrylatbasierten Schaumschicht, auf die mindestens eine Haftklebemasseschicht aufgebracht ist, wobei die Haftklebemasse (a) sich aus einem Gemisch aus zumindest zwei unterschiedlichen Synthesekautschuken, insbesondere auf Basis von Vinylaromatenblockcopolymeren, zusammensetzt, (b) ein Harz enthält, welches nicht in den die Schaumschicht bildenden Acrylaten löslich ist und (c) chemisch unvernetzt ist.

Die noch unveröffentlichte DE 10 2016 224 578 betrifft einen Haftklebestreifen aus zumindest drei Schichten, umfassend eine innenliegende Schicht F aus einem nichtdehnbaren Folienträger,eine Schicht SK1 aus einer selbstklebenden Masse, die auf einer der Oberflächen der Folienträgerschicht F angeordnet ist und die auf einer mit Mikroballons geschäumten Vinylaromatenblockcopolymer-Masse basiert, und eine Schicht SK2 aus einer selbstklebenden Masse, die auf der der Schicht SK1 gegenüberliegenden Oberfläche der Folienträgerschicht F angeordnet ist und die auf einer mit Mikroballons geschäumten Vinylaromatenblockcopolymer-Masse basiert, wobei der mittlere Durchmesser der von den Mikroballons gebildeten Hohlräume in den Selbstklebemasseschichten SK1 und SK2 jeweils unabhängig voneinander 20 bis 60 µm beträgt. Der Haftklebestreifen verfügt über eine hohe Schockresistenz.

Die ebenfalls noch unveröffentlichte DE 10 2016 224 735 betrifft einen Haftklebestreifen, der zumindest eine Schicht SK1 aus einer selbstklebenden Masse umfasst, die auf einer mit Mikroballons geschäumten Vinylaromatenblockcopolymer-Masse basiert, wobei der mittlere Durchmesser der von den Mikroballons gebildeten Hohlräume in der Selbstklebemasseschicht SK1 45 bis 110 µm beträgt. Der Haftklebestreifen verfügt insbesondere über eine hohe Wärmescherstandszeit.

WO 89/00106 A1 betrifft ein Klebeband mit einer Trägerschicht, die eine Elektronenstrahl-gehärtete Polymermatrix, etwa 5 bis etwa 70 Volumenprozent Mikrokugeln geringer Dichte und mindestens ein Pigment in einer Menge enthält, die zum Färben des Bands ausreicht.

US 2004/0131846 A1 betrifft ein Haftklebeband, das einen Elektronenstrahl-gehärteten haftklebrigen Kern auf Kautschuk-Basis mit polymeren Mikrokugeln und eine Elektronenstrahl-gehärtete haftklebrige Deckschicht auf Kautschuk-Basis enthält, die im Wesentlichen frei von Mikrokugeln ist.

DE 10 2008 056 980 A1 betrifft eine Selbstklebemasse bestehend aus einem Gemisch enthaltend (i) einen Polymerblend aus thermoplastischen und/oder nicht-thermoplastischen Elastomeren mit mindestens einem Vinylaromatenblockcopolymer, das einen Anteil größer 30 Gew.-% an 1,2-verknüpften Dien im Elastomerblock enthält, mindestens ein Klebharz und expandierte polymere Mikrokugeln. Die Selbstklebemasse weist die vorteilhaften Eigenschaften einer mit expandierten Mikroballons geschäumten Polymermatrix auf. Ferner kann das Vinylaromatenblockcopolymer durch Elektronenstrahlen im Elastomerblock vernetzt werden. Es hat sich gezeigt, dass durch diese strahlenchemische Vernetzung die kohäsiven Eigenschaften der geschäumten Selbstklebemasse bei hohen Temperaturen verbessert werden können, wobei gleichzeitig die klebtechnischen Eigenschaften beibehalten werden. Der Anteil an 1,2-verknüpftem Dien im Elastomerblock wurde hierbei zu größer 30 Gew.-% gewählt, da dem Fachmann bekannt ist, dass 1,2-verknüpfte Dien-Einheiten (sog. Vinyl-Gruppen) reaktionsfreudiger sind. Elastomerblöcke mit geringem Anteil an 1,2-verknüpftem Dien lassen sich entsprechend schwieriger zur Vernetzung bringen. Nachteilig an der Selbstklebemasse ist allerdings, dass der hohe Anteil von größer 30 Gew.-% an 1,2-verknüpftem Dien im Elastomerblock gleichzeitig mit Alterungsinstabilitäten des Vinylaromatenblockcopolymers einhergeht.

Die DE 10 2015 220075 A1 offenbart einen haftklebrigen Klebstreifen, enthaltend mindestens eine Haftklebemasseschicht, die zumindest eine Elastomerkomponente vom Typ eines Butadien-Vinylaromaten-Blockcopolymers aufweist, der einen Anfasserbereich aufweist, an dem sich der Klebstreifen durch dehnendes, verstreckendes Ziehen wiederablösen lässt

Aus der WO 2019/020363 A1 ist ein geschäumtes, doppelseitiges Klebeband mit unterschiedlichen Klebeigenschaften auf beiden Seiten bekannt, ohne dass dafür Nachstrichmassen eingesetzt werden müssen. Dies gelingt mit einer bahnförmigen, mit Mikroballons geschäumten Haftklebmasse, die- einen Blend aus mindestens einem Poly(meth)acrylat und mindestens einem Synthesekautschuk sowie- eine Vielzahl expandierbarer Mikroballons enthält

Die EP 3 336 153 A1 beschreibt ein mehrschichtiges Haftklebstoffsystem mit: einer Schaumschicht aus speziellen Multiarm-Blockcopolymeren, polymeren Weichmachern und emissionsarmen Harzen (VOC < 1000 ppm) und einer Haftklebstoffschicht, die aus linearen Blockcopolymeren, (Meth)acrylat-Copolymeren und weiteren optionalen Komponenten besteht.

Aufgabe der vorliegenden Erfindung ist es somit, eine verbesserte Haftklebemasse auf Basis von Vinylaromatenblockcopolymeren bereitzustellen, die eine höhere Alterungsstabilität besitzt und die verwendet werden kann zur Herstellung eines haftklebrigen Produkts mit einer hohen thermischen Stabilität, insbesondere Wärmescherstandszeit.

Die Aufgabe wird überraschenderweise mit einem gattungsgemäßen Haftklebestreifen erfindungsgemäß gelöst, wie er in Anspruch 1 niedergelegt ist. Demgemäß betrifft die Erfindung einen Haftklebestreifen, der mindestens eine Schicht SK1 aus einer selbstklebenden Masse umfasst, die auf Vinylaromatenblockcopolymer basiert und Klebharz enthält, wobei die mindestens eine Schicht SK1 aus der selbstklebenden Masse zu 20 bis 60 Gew.-% mindestens ein Klebharz, bezogen auf das Gesamtgewicht der Selbstklebemasseschicht, enthält, wobei das Vinylaromatenblockcopolymer
- mindestens einen Polymerblock A enthält, der überwiegend durch Polymerisation von Vinylaromaten gebildet ist, und
- gleichzeitig mindestens einen Polymerblock B enthält, der überwiegend durch Polymerisation von konjugierten Dienen gebildet ist, wobei der Anteil an 1,2-verknüpftem konjugiertem Dien, bestimmt mittels der angegebenen Prüfmethode für ¹H-NMR, im B-Block weniger als 30 Gew.-% beträgt, vorzugsweise weniger als 20 Gew.-% (wie beispielsweise mittels ¹H-NMR bestimmbar), und
- zumindest die Schicht SK1 einer Bestrahlung mit Elektronen mit einer Dosis von 10 bis 100 kGy unterzogen worden ist.

Erfindungsgemäß ist die selbstklebende Masse der Schicht SK 1 geschäumt.

Insbesondere zur Erhöhung der Wärmescherstandszeit kann die Schicht SK1 des Haftklebestreifens einer Bestrahlung mit Elektronen unterzogen werden.

Vorteilhafte Ausführungsformen des Haftklebestreifens nach Anspruch 1 sowie vorteilhafte Verwendungen befinden sich in den weiteren Ansprüchen.

Der erfindungsgemäße Haftklebestreifen überzeugt typischerweise neben einer höheren Alterungsbeständigkeit auch durch verbesserte mechanische Eigenschaften (insbesondere verbesserte Zug-Dehnungs-Eigenschaften und vorteilhafte Glasübergangstemperaturen) sowie durch eine gute Haftung sowohl auf polaren, als auch auf unpolaren, d.h. niederenergetischen Oberflächen. Nach der Bestrahlung mit Elektronen weist er ferner überraschenderweise eine deutlich verbesserte thermische Stabilität, insbesondere Wärmescherstandszeit auf, auch wenn der Formulierung kein Vernetzungspromotor wie z. B. ein mehrfachfunktionelles (Meth)acrylat zugesetzt wird. Es hat sich gezeigt, dass durch die Bestrahlung die kohäsiven Eigenschaften bei hohen Temperaturen verbessert werden können, wobei gleichzeitig typischerweise die klebtechnischen Eigenschaften, wie insbesondere die Klebkraft, und mechanische Eigenschaften wie zum Beispiel die Zugfestigkeit im Wesentlichen beibehalten werden. Die festgestellte Verbesserung der kohäsiven Eigenschaften ist insbesondere deshalb überraschend, weil die Schicht SK1 nach dem Bestrahlen mit Elektronen keinen Gelanteil aufweist und somit nicht makroskopisch oder langreichweitig vernetzt ist. Das Vinylaromatenblockcopolymer ist demzufolge nach dem Bestrahlen mit Elektronen nicht vernetzt. Ohne an die Theorie gebunden zu sein, wird vermutet, dass durch die Bestrahlung mit Elektronen zwar kein komplettes Netzwerk erzeugt wird, allerdings lokale Bindungen. Überraschenderweise lassen sich auch Schichten SK1 mit einer ausgeprägten Dicke wie insbesondere 400 bis 1500 µm durch Elektronen gleichmäßig bestrahlen, d.h. die Elektronenstrahlhärtung (ESH) auch solcher dicken Schichten kann räumlich betrachtet gleichmäßig erfolgen. Eine beidseitige, d.h. symmetrische Bestrahlung ist diesbezüglich vorteilhaft.

Die Schicht SK 1 ist geschäumt, beispielsweise mit Mikroballons. Durch die Schäumung von Selbstklebemassen, insbesondere mittels Mikroballons, können nicht lediglich Rohstoffkosten eingespart werden, sondern diese führt typischerweise ferner zum Beispiel zu einer Erhöhung der Kohäsion des Produktes, zu einer verbesserten Verklebungsfestigkeit auf rauen Untergründen sowie zu erhöhten Schockresistenzen. Alternativ kann die Schicht SK1 auch ungeschäumt sein.

Erfindungsgemäß ist mit einer selbstklebenden Masse "auf Basis von Vinylaromatenblockcopolymer" typischerweise gemeint, dass in der selbstklebenden Masse überwiegend das besagte Polymer die Funktion der Elastomerkomponente übernimmt. Vorzugsweise ist das besagte Polymer in der selbstklebenden Masse alleinig als Elastomerkomponente vorgesehen oder jedenfalls aber zu mindestens 50 Gew.-% bezogen auf den Gesamtanteil aller Elastomerkomponenten.

Der Polymerblock A des Vinylaromatenblockcopolymers ist erfindungsgemäß überwiegend durch Polymerisation von Vinylaromaten gebildet. Das bedeutet, dass der Block A typischerweise aus einer Polymerisation hervorgegangen ist, bei der mehr als 50 Gew.-% der eingesetzten Monomere Vinylaromaten sind, d.h. der Anteil an Vinylaromaten beim Polymerisieren beträgt mehr als 50 Gew.-%. Vorzugsweise geht der Polymerblock A aus einer Polymerisation hervor, bei der als Monomere ausschließlich Vinylaromaten eingesetzt worden sind.

Der Polymerblock B des Vinylaromatenblockcopolymers ist erfindungsgemäß überwiegend durch Polymerisation von konjugierten Dienen gebildet. Das bedeutet, dass der Block B typischerweise aus einer Polymerisation hervorgegangen ist, bei der mehr als 50 Gew.-% der eingesetzten Monomere konjugierte Diene sind, d.h. der Anteil an konjugiertem Dien beim Polymerisieren beträgt mehr als 50 Gew.-%. Vorzugsweise geht der Polymerblock B aus einer Polymerisation hervor, bei der als Monomere ausschließlich konjugierte Diene eingesetzt worden sind.

Ferner beträgt der Anteil an 1,2-verknüpftem konjugiertem Dien im B-Block weniger als 30 Gew.-%, vorzugsweise weniger als 20 Gew.-%, bevorzugter weniger als 15 Gew.-% und insbesondere etwa 10 Gew.-%. Mit dem Anteil an 1,2-verknüpftem konjugiertem Dien im B-Block ist der Gewichtsanteil an konjugiertem Dien, das durch 1,2-Addition (im Gegensatz zur 1,4-Addition) einpolymerisiert worden ist, gemeint, bezogen auf die bei der Herstellung des Polymerblocks B eingesetzte gesamte Monomermasse. Die 1,2-Addition von konjugiertem Dien führt zu einer vinylischen Seitengruppe im Polymerblock B, während die 1,4-Addition von konjugiertem Dien zu einer vinylischen Funktionalität in der Hauptkette des Polymerblocks B führt. Mit der 1,2-Addition eines konjugierten Diens ist somit gemeint, dass die Dienfunktionalität entweder an den Positionen C1 und C2, oder an den Positionen C3 und C4 (zum Beispiel im Fall von Isopren als konjugiertem Dien) einpolymerisiert wird, im Gegensatz zur 1,4-Addition eines konjugierten Diens, bei der die Dienfunktionalität an den Positionen C1 und C4 einpolymerisiert wird.

In einer bevorzugten Ausführungsform umfasst der Haftklebestreifen keinen (Folien-)Träger. Dabei besteht der Haftklebestreifen typischerweise aus einer einzigen Selbstklebemasseschicht SK1, so dass der Haftklebestreifen ein Einschichtsystem darstellt. Ein solches einschichtiges, beidseitig selbstklebendes Klebeband, d.h. doppelseitiges Klebeband, wird auch als "Transfertape" bezeichnet. Alternativ kann der trägerlose Haftklebestreifen neben der Schicht SK1 aber auch mindestens eine weitere Schicht enthalten, die kein Träger ist.

Die selbstklebende Masse der Schicht SK1 ist eine Haftklebemasse (PSA; englisch: "pressure sensitive adhesives"). Die Begriffe "selbstklebend" und "haftklebend" werden im Rahmen dieser Schrift insofern synonym verwendet.

Haftklebemassen sind insbesondere solche polymeren Massen, die - gegebenenfalls durch geeignete Additivierung mit weiteren Komponenten wie beispielsweise Klebharzen - bei der Anwendungstemperatur (sofern nicht anders definiert, bei Raumtemperatur) dauerhaft klebrig und klebfähig sind und an einer Vielzahl von Oberflächen bei Kontakt anhaften, insbesondere sofort anhaften (einen sogenannten "Tack" [Klebrigkeit oder Anfassklebrigkeit] aufweisen). Sie sind in der Lage, bereits bei der Anwendungstemperatur ohne eine Aktivierung durch Lösemittel oder durch Wärme - üblicherweise aber durch den Einfluss eines mehr oder weniger hohen Druckes - ein zu verklebendes Substrat hinreichend zu benetzen, damit sich zwischen der Masse und dem Substrat für die Haftung hinreichende Wechselwirkungen ausbilden können. Hierfür wesentliche Einflussparameter sind unter anderem der Druck sowie die Kontaktzeit. Die besonderen Eigenschaften der Haftklebemassen gehen unter anderem insbesondere auf deren viskoelastische Eigenschaften zurück. So können beispielsweise schwach oder stark anhaftende Klebemassen hergestellt werden; weiterhin solche, die nur einmalig und permanent verklebbar sind, so dass die Verklebung ohne Zerstörung des Klebemittels und/oder der Substrate nicht gelöst werden können, oder solche die leicht wiederablösbar und gegebenenfalls mehrfach verklebbar sind.

Haftklebemassen können grundsätzlich auf Grundlage von Polymeren unterschiedlicher chemischer Natur hergestellt werden. Die haftklebenden Eigenschaften werden unter anderem durch die Art und die Mengenverhältnisse der eingesetzten Monomere bei der Polymerisation der der Haftklebemasse zugrunde liegenden Polymere, deren mittlere Molmasse und Molmassenverteilung sowie durch Art und Menge der Zusatzstoffe der Haftklebemasse, wie Klebharze, Weichmacher und dergleichen, beeinflusst.

Zur Erzielung der viskoelastischen Eigenschaften werden die Monomere, auf denen die der Haftklebemasse zugrunde liegenden Polymere basieren, sowie die gegebenenfalls vorhandenen weiteren Komponenten der Haftklebemasse insbesondere derart gewählt, dass die Haftklebemasse eine Glasübergangstemperatur (nach DIN 53765) unterhalb der Anwendungstemperatur (also üblicherweise unterhalb der Raumtemperatur) aufweist.

Gegebenenfalls kann es vorteilhaft sein, durch geeignete kohäsionssteigernde Maßnahmen, wie beispielsweise Vernetzungsreaktionen (Ausbildung brückenbildender Verknüpfungen zwischen den Makromolekülen), den Temperaturbereich, in dem eine Polymermasse haftklebrige Eigenschaften aufweist, zu vergrößern und/oder zu verschieben. Der Anwendungsbereich der Haftklebemassen kann somit durch eine Einstellung zwischen Fließfähigkeit und Kohäsion der Masse optimiert werden.

Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

### Erfindungsgemäß einsetzbare Selbstklebemasseschichten

Die Schicht SK1 der erfindungsgemäßen Haftklebestreifen basiert auf einer Vinylaromatenblockcopolymer-Masse.

Vorzugsweise wird in der Schicht SK1 als Vinylaromatenblockcopolymer mindestens ein Synthesekautschuk in Form eines Blockcopolymers mit einem Aufbau A-B, A-B-A, (A-B)ₙ, (A-B)ₙX oder (A-B-A)ₙX eingesetzt,
worin
- die Blöcke A unabhängig voneinander für ein Polymer, gebildet durch Polymerisation mindestens eines Vinylaromaten,
- die Blöcke B unabhängig voneinander für ein Polymer, gebildet durch Polymerisation von konjugierten Dienen mit 4 bis 18 C-Atomen,
- X für den Rest eines Kopplungsreagenzes oder Initiators und
- n für eine ganze Zahl ≥ 2 stehen.

Besonders bevorzugt sind alle Synthesekautschuke der erfindungsgemäßen Selbstklebemasseschicht Blockcopolymere mit einem Aufbau A-B, A-B-A, (A-B)ₙ, (A-B)ₙX oder (A-B-A)ₙX wie vorstehend dargelegt. Die erfindungsgemäße Selbstklebemasseschicht kann somit auch Gemische verschiedener Blockcopolymere mit einem Aufbau wie vorstehend beschrieben enthalten.

Geeignete Blockcopolymere (Vinylaromatenblockcopolymere) umfassen also einen oder mehrere gummiartige Blöcke B (Weichblöcke) und einen oder mehrere glasartige Blöcke A (Hartblöcke). Besonders bevorzugt ist mindestens ein Synthesekautschuk der erfindungsgemäßen Selbstklebemasseschicht ein Blockcopolymer mit einem Aufbau A-B, A-B-A, (A-B)₂X, (A-B)₃X oder (A-B)₄X, wobei für A, B und X die vorstehenden Bedeutungen gelten. Ganz besonders bevorzugt sind alle Synthesekautschuke der erfindungsgemäßen Selbstklebemasseschicht Blockcopolymere mit einem Aufbau A-B, A-B-A, (A-B)₂X, (A-B)₃X oder (A-B)₄X, wobei für A, B und X die vorstehenden Bedeutungen gelten. Insbesondere ist der Synthesekautschuk der erfindungsgemäßen Selbstklebemassenschicht ein Gemisch aus Blockcopolymeren mit einem Aufbau A-B, A-B-A, (A-B)₂X, (A-B)₃X oder (A-B)₄X, das bevorzugt mindestens Diblockcopolymere A-B und/oder Triblockcopolymere A-B-A und/oder (A-B)₂X enthält.

Weiterhin vorteilhaft ist ein Gemisch aus Diblock- und Triblockcopolymeren und (A-B)ₙ- oder (A-B)ₙX-Blockcopolymeren mit n größer gleich 3.

Weiterhin vorteilhaft ist ein Gemisch aus Diblock- und Multiblockcopolymeren und (A-B)ₙ- oder (A-B)ₙX-Blockcopolymeren mit n größer gleich 3.

Erfindungsgemäß wird ein Gemisch aus linearen Blockcopolymeren eingesetzt, wie insbesondere ein Gemisch aus Diblockcopolymeren (A-B) und Triblockcopolymeren (A-B-A). Beispielsweise können zwei Sorten Vinylaromatenblockcopolymere mit einem unterschiedlichen Gewichtsverhältnis an Diblockcopolymeren (A-B) und Triblockcopolymeren (A-B-A) eingesetzt werden. Besonders bevorzugt basieren erfindungsgemäße Selbstklebemassen auf Styrolblockcopolymeren, beispielsweise besitzen die Blockcopolymere der Selbstklebemassen Polystyrolendblöcke.

Als Vinylaromatenblockcopolymere können somit beispielsweise Diblockcopolymere A-B in Kombination mit anderen der genannten Blockcopolymere genutzt werden. Über den Anteil an Diblockcopolymeren können das Auffließverhalten der Selbstklebemassen und deren Verklebungsfestigkeit eingestellt werden. Erfindungsgemäß eingesetztes Vinylaromatenblockcopolymer weist vorzugsweise einen Diblockcopolymeranteil von 0 Gew.-% bis 70 Gew.-%, bevorzugter von 15 Gew.-% bis 65 Gew.-%, noch bevorzugter 30 bis 60 Gew.-%, und insbesondere von 40 bis 60 Gew.-%, wie zum Beispiel größer 51,5 Gew.-% bis 55 Gew.-% auf. Ein höherer Anteil an Diblockcopolymer im Vinylaromatenblockcopolymer führt zu einer deutlichen Reduktion an Kohäsion der Klebemasse.

Kommerziell erhältliche Blockcopolymer-Typen weisen häufig eine Kombination aus Polymeren unterschiedlicher Architektur auf. So enthält beispielsweise Kraton D1101, nominell ein lineares Polystyrol-Polybutadien-Triblockcopolymer, gemäß Herstellerangabe (The Global Connection for Polymer and Compound Solution - Product and Application Guide, Kraton Performance Polymers, 2011) zu 16 Gew.-% ein Diblockcopolymer. Kraton D1118 dagegen, ein anderes Polystyrol-Polybutadien-Blockcopolymer, zu 78 Gew.-% ein Diblockcopolymer.

Die aus den A- und B-Blöcken resultierenden Blockcopolymere können gleiche oder unterschiedliche B-Blöcke enthalten. Die Blockcopolymere können lineare A-B-A-Strukturen aufweisen. Einsetzbar sind ebenfalls Blockcopolymere von radialer Gestalt sowie sternförmige und lineare Multiblockcopolymere. Als weitere Komponenten können AB-Zweiblockcopolymere vorhanden sein. Sämtliche der vorgenannten Polymere können allein oder im Gemisch miteinander genutzt werden.

In einem erfindungsgemäß eingesetzten Vinylaromatenblockcopolymer, wie insbesondere einem Styrolblockcopolymer, beträgt der Anteil an Polyvinylaromaten, wie insbesondere Polystyrol, vorzugsweise mindestens 12 Gew.-%, bevorzugter mindestens 18 Gew.-% und besonders bevorzugt mindestens 25 Gew.-% und ebenso vorzugsweise höchstens 45 Gew.-% und bevorzugter höchstens 35 Gew. -%.

Anstelle der bevorzugten Polystyrolblöcke können als Vinylaromaten auch Polymerblöcke auf Basis anderer aromatenhaltiger Homo- und Copolymere (bevorzugt C₈- bis C₁₂-Aromaten) mit Glasübergangstemperaturen von größer 75 °C genutzt werden wie zum Beispiel α-methylstyrolhaltige Aromatenblöcke. Weiterhin können auch gleiche oder unterschiedliche A-Blöcke enthalten sein.

Vorzugsweise umfassen dabei die Vinylaromaten zum Aufbau des Blocks A Styrol, α-Methylstyrol und/oder andere Styrol-Derivate. Der Block A kann somit als Homo- oder Copolymer vorliegen. Besonders bevorzugt ist der Block A ein Polystyrol.

Bevorzugte konjugierte Diene als Monomere für den Weichblock B sind insbesondere ausgewählt aus der Gruppe bestehend aus Butadien, Isopren, Ethylbutadien, Phenylbutadien, Pentadien, Hexadien, Ethylhexadien, Dimethylbutadien, α-Farnesen und β-Farnesen sowie einer beliebigen Mischung dieser Monomere. Auch der Block B kann als Homopolymer oder als Copolymer vorliegen. Besonders bevorzugt sind Butadien, Isopren oder eine Mischung davon. Insbesondere wird Butadien eingesetzt. Polybutadien weist im Vergleich zu Polyisopren ein besseres Alterungsverhalten auf.

A-Blöcke werden im Zusammenhang dieser Erfindung auch als "Hartblöcke" bezeichnet. B-Blöcke werden entsprechend auch "Weichblöcke" oder "Elastomerblöcke" genannt. Dies spiegelt die erfindungsgemäße Auswahl der Blöcke entsprechend ihrer Glasübergangstemperaturen (für A-Blöcke mindestens 25 °C, insbesondere mindestens 50 °C, und für B-Blöcke höchstens 25 °C, vorzugsweise höchstens -25 °C, und insbesondere höchstens -50 °C) wider.

Im Allgemeinen kann man eine wie oben beschriebene Block-Architektur als "Hartblock-Weichblock-Architektur" beschreiben, auch wenn es sich nicht um Vinylaromatenblockcopolymere handelt.

Der Anteil der Vinylaromatenblockcopolymere, wie insbesondere Styrolblockcopolymere, beträgt vorzugsweise in Summe bezogen auf die gesamte Selbstklebemasseschicht mindestens 35 Gew.-%. Ein zu geringer Anteil an Vinylaromatenblockcopolymeren hat zur Folge, dass die Kohäsion der Haftklebemasse relativ niedrig ist.

Der maximale Anteil der Vinylaromatenblockcopolymere, wie insbesondere Styrolblockcopolymere, in Summe bezogen auf die gesamte Selbstklebemasse beträgt maximal 75 Gew.-%, bevorzugt maximal 65 Gew.-%, ganz besonders bevorzugt maximal 55 Gew.-%. Ein zu hoher Anteil an Vinylaromatenblockcopolymeren hat wiederum zur Folge, dass die Haftklebemasse kaum noch haftklebrig ist.

Dementsprechend beträgt vorzugsweise der Anteil der Vinylaromatenblockcopolymere, wie insbesondere Styrolblockcopolymere, in Summe bezogen auf die gesamte Selbstklebemasse mindestens 35 Gew.-% und gleichzeitig maximal 75 Gew.-%, bevorzugter maximal 65 Gew.-%, ganz besonders bevorzugt maximal 55 Gew.-%.

Die Haftklebrigkeit der Selbstklebemassen kann durch Zugabe von mit der Elastomerphase mischbaren Klebharzen erreicht werden. Die Selbstklebemassen weisen in der Regel neben dem mindestens einen Vinylaromatenblockcopolymer mindestens ein Klebharz auf, um die Adhäsion in gewünschter Weise zu erhöhen. Das Klebharz sollte mit dem Elastomerblock der Blockcopolymere verträglich sein.

Unter einem "Klebharz" wird entsprechend dem allgemeinem Fachmannverständnis ein niedermolekulares, oligomeres oder polymeres Harz verstanden, das die Adhäsion (den Tack, die Eigenklebrigkeit) der Haftklebemasse im Vergleich zu der kein Klebharz enthaltenden, ansonsten aber identischen Haftklebemasse erhöht.

Vorzugsweise wird als Klebharz zu mindestens 75 Gew.-% (bezogen auf den Gesamtharzanteil) ein Harz gewählt mit einem DACP (diacetone alcohol cloud point) von größer 0 °C, bevorzugt größer 10 °C, insbesondere größer 30 °C, und einer Erweichungstemperatur (Ring & Ball) von größer gleich 70 °C, vorzugsweise größer gleich 100 °C. Besonders bevorzugt weist das genannte Klebharz gleichzeitig einen DACP-Wert von maximal 45 °C auf, sofern keine Isoprenblöcke in der Elastomerphase vorliegen, oder von maximal 60 °C auf, sofern Isoprenblöcke in der Elastomephase vorliegen. Besonders bevorzugt beträgt die Erweichungstemperatur des genannten Klebharzes maximal 150 °C. Erfindungsgemäß handelt es sich bei den Klebharzen zu mindestens 75 Gew.-% (bezogen auf den Gesamtharzanteil) um Kohlenwasserstoffharze oder Terpenharze oder eine Mischung dergleichen.

Es wurde gefunden, dass als Klebrigmacher für die Haftklebemasse(n) insbesondere unpolare Kohlenwasserstoffharze, zum Beispiel hydrierte und nicht hydrierte Polymerisate des Dicyclopentadiens, nicht hydrierte, partiell, selektiv oder vollständig hydrierte Kohlenwasserstoffharze auf Basis von C₅-, C₅/C₉- oder C₉-Monomerströmen, Polyterpenharze auf Basis von α-Pinen und/oder β-Pinen und/oder δ-Limonen vorteilhaft eingesetzt werden können. Vorgenannte Klebharze können sowohl allein als auch im Gemisch eingesetzt werden. Dabei können sowohl bei Raumtemperatur feste als auch flüssige Harze zum Einsatz kommen. Klebharze, hydriert oder nicht hydriert, die auch Sauerstoff enthalten, können optional bevorzugt bis zu einem maximalen Anteil von 25 % bezogen auf die Gesamtmasse der Harze in der Klebemasse eingesetzt werden, so zum Beispiel Kolophonium- und/oder Kolophoniumesterharze und/oder Terpenphenolharze.

Hydrierte Kohlenwasserstoffharze sind erfindungsgemäß besonders geeignet, da durch die Abwesenheit von Doppelbindungen die Vernetzung nicht gestört werden kann.

Darüber hinaus können aber auch nicht hydrierte Harze eingesetzt werden, insbesondere wenn Vernetzungspromotoren wie zum Beispiel mehrfunktionelle Acrylate eingesetzt werden. Besonders bevorzugt ist der Einsatz von Terpenharzen auf der Basis von α-Pinen (Piccolyte A-Serie der Firma Pinova, Dercolyte A-Serie der Firma DRT), da diese neben einer hohen Kohäsion ferner eine sehr hohe Adhäsion, auch bei hohen Temperaturen, gewährleisten. Aber auch andere nicht hydrierte Kohlenwasserstoffharze, nicht hydrierte Analoga der oben beschriebenen hydrierten Harze, können eingesetzt werden.

In den Selbstklebemasseschichten sind 20 bis 60 Gew.-% mindestens eines Klebharzes, bezogen auf das Gesamtgewicht der Selbstklebemasseschicht, bevorzugt 30 bis 50 Gew.- % mindestens eines Klebharzes, bezogen auf das Gesamtgewicht der Selbstklebemasseschicht, enthalten.

Zur Stabilisierung der Haftklebemasse gegen Alterung werden häufig primäre Antioxidantien wie zum Beispiel sterisch gehinderte Phenole, sekundäre Antioxidantien wie zum Beispiel Phosphite oder Thioether und/oder C-Radikalfänger zugesetzt. Da das erfindungsgemäß eingesetzte Vinylaromatenblockcopolymer einen geringen Anteil an 1,2-verknüpftem konjugiertem Dien im B-Block aufweist, ist der Haftklebestreifen der vorliegenden Erfindung bereits ohne Zugabe eines Alterungsschutzmittels vergleichsweise alterungsstabil. Die Alterungsstabilität kann jedoch durch Zugabe eines Alterungsschutzmittels weiter verbessert werden. Es ist dabei allerdings zu berücksichtigen, dass Alterungsschutzmittel die Prozesskomplexität erhöhen und beispielsweise zu Migration neigen bzw. eine weichmachende Wirkung aufweisen.

Als weitere Additive können typischerweise Lichtschutzmittel wie zum Beispiel UV-Absorber und sterisch gehinderte Amine, Antiozonantien, Metalldesaktivatoren, Verarbeitungshilfsmittel und endblockverstärkende Harze eingesetzt werden.

Plastifizierungsmittel wie zum Beispiel Flüssigharze (Weichharze), Weichmacheröle oder niedermolekulare flüssige Polymere wie zum Beispiel niedermolekulare Polyisobutylene mit Molmassen von weniger als 1500 g/mol (Zahlenmittel) oder flüssige EPDM-Typen können in geringen Mengen von weniger als 20 Gew.-%, wie insbesondere weniger als 5 Gew.-% eingesetzt werden, bezogen auf die Gesamtmasse der Selbstklebemasse. Vorzugsweise wird Piccolyte^{®} A25 der Firma Pinova eingesetzt, ein Polyterpenharz mit geringem Molekulargewicht, das von α-Pinen abgeleitet ist. Plastifizierungsmittel wie zum Beispiel Weichharze haben insbesondere den Vorteil, dass sie die Klebrigkeit der Selbstklebemasse erhöhen. Überraschenderweise wurde außerdem festgestellt, dass sich auch bei Verwendung von Plastifizierungsmittel in der erfindungsgemäßen Selbstklebemasseschicht nach deren Bestrahlung mit Elektronen sehr gute Wärmestabilitäten wie zum Beispiel Wärmescherstandszeiten erzielen lassen.

Füllstoffe wie zum Beispiel Siliziumdioxid, Glas (gemahlen oder in Form von Kugeln), Aluminiumoxide, Zinkoxide, Calciumcarbonate, Titandioxide, Ruße, etc. ebenso wie Farbpigmente und Farbstoffe (Farbmittel) sowie optische Aufheller können ebenfalls verwendet werden. Als Farbmittelträger können zum Beispiel Ethylenvinylacetat-Copolymer oder andere insbesondere thermoplastische Materialien eingesetzt werden, alternativ können auch wässrige Farbmittel wie Farbmitteldispersionen eingesetzt werden.

Für eine Erhöhung der Strahlenausbeute werden gegebenenfalls Vernetzungspromotoren für die Elektronenstrahlhärtung verwendet. Als Vernetzungspromotoren können beispielsweise Vernetzungspromotoren auf der Basis multifunktionaler Acrylate oder Thiole eingesetzt werden. Es wurde jedoch überraschenderweise gefunden, dass trotz des geringen Anteils an 1,2-verknüpftem konjugiertem Dien im Polymerblock B des eingesetzten Vinylaromatenblockcopolymers die entsprechende Selbstklebemasseschicht auch ohne zusätzlichen Vernetzungspromotor durch Bestrahlung mit Elektronen gehärtet werden kann, so dass sich eine Schicht mit hoher Wärmescherstandszeit ergibt. Das Weglassen des Vernetzungspromotors senkt die Kosten und die Komplexität bei der Herstellung des erfindungsgemäßen Haftklebestreifens. Vorzugsweise werden daher erfindungsgemäß solche Haftklebestreifen eingesetzt, die keinen Vernetzungspromotor enthalten.

Gemäß einer bevorzugten Ausführungsform der Erfindung besteht die Klebemasse nur aus Vinylaromatenblockcopolymeren, Klebharzen, Mikroballons und gegebenenfalls den oben erwähnten Additiven.

Weiter vorzugsweise besteht die Klebemasse aus folgender Zusammensetzung:

| | | |
|---|---|---|
| • | Vinylaromatenblockcopolymere | 35 bis 65 Gew.-% |
| • | Klebharze | 34,6 bis 45 Gew.-% |
| • | Mikroballons | 0,2 bis 10 Gew.-% |
| • | Additive | 0,2 bis 10 Gew.-% |

Weiter vorzugsweise besteht die Klebemasse aus folgender Zusammensetzung:

| | | |
|---|---|---|
| • | Vinylaromatenblockcopolymere | 35 bis 75 Gew.-% |
| • | Klebharze | 24,8 bis 60 Gew.-% |
| • | Mikroballons | 0,2 bis 10 Gew.-% |

Die erfindungsgemäße Selbstklebemasse SK1 ist vorzugsweise geschäumt.

Grundsätzlich lassen sich Schäume auf zwei Wegen herstellen. Zum einen durch die Einwirkung eines Treibgases, sei es als solches zugesetzt oder aus einer chemischen Reaktion resultierend, zum anderen durch die Einarbeitung von Hohlkugeln in die Werkstoffmatrix. Schäume, die auf letzterem Wege hergestellt werden, werden als syntaktische Schäume bezeichnet.

Physikalische Treibmittel, die in der vorliegenden Anmeldung nützlich sind, sind irgendwelche natürlich vorkommenden atmosphärischen Materialien, die bei der Temperatur und dem Druck, bei denen der Schaum aus der Düse austritt, gasförmig sind. Physikalische Treibmittel können in das Polymermischungsmaterial als Gas, als ein überkritisches Fluid oder als eine Flüssigkeit eingeführt, d.h. injiziert werden. Die Wahl des verwendeten physikalischen Treibmittels hängt von den gewünschten Eigenschaften in den resultierenden Schäumen ab. Andere Faktoren, die bei der Auswahl eines Treibmittels berücksichtigt werden, sind seine Toxizität, das Dampfdruckprofil, die Einfachheit der Handhabung und die Löslichkeit in Bezug auf die verwendeten polymeren Materialien. Entflammbare Treibmittel wie Pentan, Butan und andere organische Materialien wie Fluorkohlenwasserstoffe und Fluorchlorkohlenwasserstoffe können verwendet werden, aber nicht brennbare, nicht toxische, nicht ozonabbauende Treibmittel werden bevorzugt, weil sie leichter zu verwenden sind, z. B. weniger Bedenken hinsichtlich der Umwelt bestehen, usw. Geeignete physikalische Treibmittel sind z. B. Kohlendioxid, Stickstoff, SF₆, Stickstoffoxide, perfluorierte Flüssigkeiten wie C₂F₆, Edelgase wie Helium, Argon und Xenon, Luft (typischerweise eine Mischung aus Stickstoff und Sauerstoff), und Mischungen dieser Materialien.

Alternativ können im Schaum auch chemische Treibmittel verwendet werden. Geeignete chemische Treibmittel umfassen eine Mischung aus Natriumbicarbonat und Zitronensäure, Dinitrosopentamethylentetramin, p-Toluolsulfonylhydrazid, 4-4'-Oxybis (benzolsulfonylhydrazid, Azodicarbonamid (1,1'-Azobisformamid), p-Toluolsulfonylsemicarbazid, 5-Phenyltetrazol, 5 -Phenyltetrazol-Analoga, Diisopropylhydrazodicarboxylat, 5-Phenyl-3,6-dihydro-1, 3,4-Oxadiazin-2-on und Natriumborhydrid.

Bei einem syntaktischen Schaum sind Mikrohohlkugeln wie Glaskugeln oder keramische Hohlkugeln oder Mikroballons in einer Polymermatrix eingebunden. Dadurch sind bei einem syntaktischen Schaum die Hohlräume voneinander getrennt und die in den Hohlräumen befindlichen Substanzen (Gas, Luft) durch eine Membran von der umgebenden Matrix abgetrennt.

Mit Mikrohohlkugeln geschäumte Massen zeichnen sich durch eine definierte Zellstruktur mit einer gleichmäßigen Größenverteilung der Schaumzellen aus. Mit Mikrohohlkugeln werden geschlossenzellige Schäume ohne Kavitäten erhalten, die sich im Vergleich zu offenzelligen Varianten unter anderem durch eine bessere Abdichtungswirkung gegen Staub und flüssige Medien auszeichnen. Darüber hinaus sind chemisch oder physikalisch geschäumte Materialien anfälliger für ein irreversibles Zusammenfallen unter Druck und Temperatur und zeigen häufig eine niedrigere Kohäsionsfestigkeit.

Besonders vorteilhafte Eigenschaften lassen sich erzielen, wenn als Mikrokugeln zur Schäumung expandierbare Mikrokugeln (auch als "Mikroballons" bezeichnet) eingesetzt werden. Durch ihre flexible, thermoplastische Polymerschale besitzen derartige Schäume eine höhere Anpassungsfähigkeit als solche, die mit nicht expandierbaren, nicht polymeren Mikrohohlkugeln (beispielsweise Glashohlkugeln) gefüllt sind. Sie eignen sich besser zum Ausgleich von Fertigungstoleranzen, wie sie zum Beispiel bei Spritzgussteilen die Regel sind, und können aufgrund ihres Schaumcharakters auch thermische Spannungen besser kompensieren.

Bevorzugt erfolgt die Schäumung daher jeweils durch das Einbringen und nachfolgende Expandieren von Mikroballons, d.h. die selbstklebende Masse der Schicht SK 1 ist bevorzugt mit Mikroballons geschäumt.

Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind.

Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an unexpandierten Mikroballontypen kommerziell erhältlich, welche sich im Wesentlichen über ihre Größe und ihre zur Expansion benötigten Starttemperaturen (75 bis 220 °C) differenzieren. Ein Beispiel für kommerziell erhältliche unexpandierte Mikroballons sind die Expancel^{®} DU-Typen (DU = dry unexpanded) von der Firma Akzo Nobel. In der Typenbezeichnung Expancel xxx DU yy (Dry unexpended) steht dabei "xxx" für die Zusammensetzung der Mikroballonabmischung, und "yy" für die Größe der Mikroballons im expandierten Zustand.

Unexpandierte Mikroballontypen sind auch als wässrige Dispersion mit einem Feststoffbeziehungsweise Mikroballonanteil von ca. 40 bis 45 Gew.-% erhältlich, weiterhin auch als polymergebundene Mikroballons (Masterbatche), zum Beispiel in Ethylenvinylacetat mit einer Mikroballonkonzentration von ca. 65 Gew.-%. Sowohl die Mikroballon-Dispersionen als auch die Masterbatche sind wie die DU-Typen zur Herstellung einer geschäumten erfindungsgemäßen Selbstklebemasse geeignet.

Eine geschäumte erfindungsgemäße Selbstklebemasse SK1 kann auch mit sogenannten vorexpandierten Mikroballons erzeugt werden. Bei dieser Gruppe findet die Expansion schon vor der Einmischung in die Polymermatrix statt. Vorexpandierte Mikroballons sind beispielsweise unter der Bezeichnung Dualite^{®} oder mit der Typenbezeichnung Expancel xxx DE yy (Dry Expanded) von der Firma Akzo Nobel kommerziell erhältlich. "xxx" steht für die Zusammensetzung der Mikroballonabmischung, "yy" steht für die Größe der Mikroballons im expandierten Zustand.

Bei der Verarbeitung von bereits expandierten Mikroballontypen kann es passieren, dass die Mikroballons aufgrund ihrer geringen Dichte in der Polymermatrix, in die diese eingearbeitet werden sollen, zur Flotation neigen, also in der Polymermatrix während des Verarbeitungsprozesses "nach oben" aufschwimmen. Dies führt zu einer ungleichmäßigen Verteilung der Mikroballons in der Schicht. Im oberen Bereich der Schicht (z-Richtung) sind mehr Mikroballons anzutreffen als im unteren Bereich der Schicht, so dass sich ein Dichtegradient über die Schichtdicke einstellt.

Um einen solchen Dichtegradienten weitgehend oder nahezu vollständig zu verhindern, werden erfindungsgemäß bevorzugt nicht oder nur wenig vorexpandierte Mikroballons in die Polymermatrix der Schicht SK1 eingearbeitet. Erst nach dem Einarbeiten in die Schicht werden die Mikroballons expandiert. Auf diese Weise ergibt sich eine gleichmäßigere Verteilung der Mikroballons in der Polymermatrix.

Vorzugsweise werden die Mikroballons so gewählt, dass das Verhältnis der Dichte der Polymermatrix zu der Dichte der in die Polymermatrix einzuarbeitenden (nicht oder nur wenig vorexpandierten) Mikroballons zwischen 1 und 1:6 liegt. Erst nach oder unmittelbar bei der Einarbeitung erfolgt dann die Expansion. Bei lösungsmittelhaltigen Massen werden die Mikroballons bevorzugt erst nach dem Einarbeiten, Beschichten, Trocknen (Lösungsmittelabdampfen) expandiert. Erfindungsgemäß bevorzugt werden daher DU-Typen verwendet.

Erfindungsgemäß beträgt der mittlere Durchmesser der von den Mikroballons gebildeten Hohlräume in der geschäumten Selbstklebemasseschicht SK1 vorzugsweise 20 bis 150 µm, bevorzugter 20 bis 50 µm, wie zum Beispiel 40 bis 45 µm. Im Bereich von 20 bis 50 µm führen die Mikroballons zu besonders hohen Schockresistenzen der Selbstklebemasseschichten.

Da hierbei die Durchmesser der von den Mikroballons gebildeten Hohlräume in den geschäumten Selbstklebemasseschichten vermessen werden, handelt es sich bei den Durchmessern um jene Durchmesser der von den expandierten Mikroballons gebildeten Hohlräume. Mit dem mittleren Durchmesser ist dabei das arithmetische Mittel der Durchmesser der von den Mikroballons gebildeten Hohlräume in der jeweiligen Selbstklebemasseschicht SK1 gemeint.

Wird mittels Mikroballons geschäumt, dann können die Mikroballons als Batch, Paste oder als unverschnittenes oder verschnittenes Pulver der Formulierung zugeführt werden. Des Weiteren können sie in Lösungsmittel suspendiert vorliegen.

Der Anteil der Mikroballons in der Selbstklebemasseschicht SK1 liegt gemäß einer bevorzugten Ausführungsform der Erfindung bei bis zu 12 Gew.-%, vorzugsweise zwischen 0,25 Gew.-% und 5 Gew.-%, bevorzugter zwischen 0,5 und 4 Gew.-%, noch bevorzugter zwischen 1 und 3,5 Gew.-%, und insbesondere bei 2,0 bis 3,0 Gew.-%, jeweils bezogen auf die Gesamtzusammensetzung der Selbstklebemasseschicht. In diesen Bereichen lassen sich Selbstklebemasseschichten bereitstellen, die typischerweise eine besonders gute Balance zwischen Adhäsion und Kohäsion aufweisen.

Eine erfindungsgemäße expandierbare Mikrohohlkugeln enthaltende Selbstklebemasse SK1 darf zusätzlich auch nicht-expandierbare Mikrohohlkugeln enthalten. Entscheidend ist nur, dass nahezu alle Gas beinhaltenden Kavernen geschlossen sind durch eine dauerhaft dichte Membran, egal ob diese Membran nun aus einer elastischen und thermoplastisch dehnbaren Polymermischung besteht oder etwa aus elastischem und - im Spektrum der in der Kunststoffverarbeitung möglichen Temperaturen - nicht-thermoplastischem Glas.

Geeignet für die erfindungsgemäße Selbstklebemasse sind außerdem - unabhängig gewählt von anderen Additiven - Polymervollkugeln, Glashohlkugeln, Glasvollkugeln, keramische Hohlkugeln, keramische Vollkugeln und/oder Kohlenstoffvollkugeln ("Carbon Micro Balloons").

Die absolute Dichte einer geschäumten erfindungsgemäßen Selbstklebemasseschicht SK1 beträgt vorzugsweise 400 bis 990 kg/m³, bevorzugter 450 bis 800 kg/m³, noch bevorzugter 500 bis 700 kg/m³ und insbesondere 500 bis 600 kg/m³.

### Ausgestaltung und Herstellung des Haftklebestreifens

### 1. Ausgestaltung des Haftklebestreifens:

Vorzugsweise weisen alle Schichten des Haftklebestreifens im Wesentlichen die Form eines Quaders auf. Weiter vorzugsweise sind alle Schichten vollflächig miteinander verbunden. Diese Verbindung kann durch die Vorbehandlung der Folienoberflächen optimiert werden.

Der allgemeine Ausdruck "Klebestreifen" (Haftklebesteifen), synonym auch "Klebeband" (Haftklebeband), umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Der Haftklebestreifen weist somit eine Längsausdehnung (x-Richtung) und eine Breitenausdehnung (y-Richtung) auf. Der Haftklebestreifen weist auch eine senkrecht zu beiden Ausdehnungen verlaufende Dicke (z-Richtung) auf, wobei die Breitenausdehnung und Längsausdehnung um ein Vielfaches größer sind als die Dicke. Die Dicke ist über die gesamte durch Länge und Breite bestimmte Flächenausdehnung des Haftklebestreifens möglichst gleich, vorzugsweise exakt gleich.

Der erfindungsgemäße Haftklebestreifen liegt insbesondere in Bahnform vor. Unter einer Bahn wird ein Objekt verstanden, dessen Länge (Erstreckung in x-Richtung) um ein Vielfaches größer ist als die Breite (Erstreckung in y-Richtung) und die Breite entlang der gesamten Länge in etwa vorzugsweise genau gleich bleibend ausgebildet ist.

Typische Konfektionierformen der erfindungsgemäßen Haftklebestreifen sind Klebebandrollen in jeglicher denkbarer Abmessung, Spulen mit langer Lauflänge und verschiedenen Breiten, Ballen, Stangen und Klebestreifen, wie sie zum Beispiel in Form von Stanzlingen erhalten werden.

Bevorzugt sind Stanzlinge in allen denkbaren Größen und Formen, beispielsweise als vollflächiger Stanzling mit gleichen oder unterschiedlichen Kantenlängen, runden oder scharfen Ecken oder auch speziell angepassten Formen, aber auch als ausgestanzter Rahmen in allen denkbaren Größen, Formen und Stegbreiten. Durch die Größe des Stanzlings kann die Haltekraft des einzelnen Verbindungspunktes angepasst werden. Die Stanzlinge können direkt auf dem Liner liegen, ohne auf der anderen Seite mit einem weiteren Liner abgedeckt zu sein, und werden so der Verarbeitung zugeführt. In diesem Fall sollte das Bauteil direkt weiterverarbeitet werden. Alternativ können die Stanzlinge auf der offenen Seite mit einem zusätzlichen angepassten Liner mit oder ohne Fingerlift versehen werden. In diesem Fall kann eine Lagerung, ein Versand oder Ähnliches stattfinden.

Allgemein bietet es sich an, Stanzlinge mittels maschinell automatisierten Prozessen zu applizieren bzw. auf Bauteilen zu verkleben. Hierbei kann ein eventuell noch vorhandener Liner bei Bedarf entfernt werden.

Weiterhin kann das Klebeband schon in Segmente geschnitten auf Rollen vorliegen, wie zum Beispiel zur Montage von Verkabelungen im Automobilbereich. Dies ermöglicht das Abziehen von einzelnen Stücken vom Liner. Im Gegensatz zu den üblichen Stanzlingen sind die Stücke hier aber aneinanderliegend auf dem Liner und damit immer rechteckig.

Erfindungsgemäße Klebebänder, die ein- oder beidseitig mit Klebstoffen beschichtet sind, werden am Ende des Herstellungsprozesses zumeist zu einer Rolle in Form einer archimedischen Spirale aufgewickelt. Um bei doppelseitig klebenden Klebebändern zu verhindern, dass die Haftklebmassen miteinander in Kontakt kommen, oder um bei einseitig klebenden Klebebändern ein leichteres Abrollen zu gewährleisten, wird die Klebmasse vor dem Wickeln des Klebebandes mit einem Abdeckmaterial (auch als Trennmaterial bezeichnet) bedeckt. Dem Fachmann sind derartige Abdeckmaterialien unter den Namen Releaseliner oder Liner bekannt. Neben der Abdeckung von ein- oder doppelseitig klebenden Klebebändern werden Liner auch zur Eindeckung von Etiketten eingesetzt. Ein Liner (Trennpapier, Trennfolie) ist nicht Bestandteil eines Haftklebestreifens, sondern nur ein Hilfsmittel zu dessen Herstellung, Lagerung und/oder für die Weiterverarbeitung durch Stanzen. Darüber hinaus ist ein Liner im Gegensatz zu einem Klebebandträger nicht fest mit einer Klebstoffschicht verbunden. Die Releaseliner sorgen des Weiteren dafür, dass die Klebmasse vor der Anwendung nicht verschmutzt wird. Zusätzlich können Releaseliner über die Art und Zusammensetzung der Releasematerialien so eingestellt werden, dass das Klebeband mit der gewünschten Kraft (leicht oder schwer) abgerollt werden kann. Bei beidseitig mit Klebmasse beschichteten Klebebändern sorgen die Releaseliner zusätzlich dafür, dass beim Abrollen die richtige Seite der Klebemasse zuerst freigelegt wird.

Als Releaseliner werden typischerweise Papier- oder Folienträger verwendet, die ein- oder insbesondere beidseitig mit einer abhäsiven Beschichtungsmasse (auch als dehäsive oder anti-adhäsive Masse bezeichnet) ausgerüstet werden, um die Adhäsionsneigung von adhärierenden Produkten gegenüber diesen Oberflächen zu verringern (trennwirksame Funktion). Als abhäsive Beschichtungsmassen, die auch Releasebeschichtung genannt werden, können eine Vielzahl verschiedener Stoffe eingesetzt werden: Wachse, fluorierte oder teilfluorierte Verbindungen und insbesondere Silikone sowie verschiedene Copolymere mit Silikon-Anteilen. In den letzten Jahren haben sich Silikone als Releasematerialien im Bereich der Klebeband-Anwendung auf Grund ihrer guten Prozessierbarkeit, niedrigen Kosten und des breiten Eigenschaftsprofils weitgehend durchgesetzt.

Um das in der Regel unmittelbar vor der Applikation stattfindende Entfernen eines Releaseliners vom Klebeband zu erleichtern, werden die Liner gelegentlich auf ihrer Rückseite (der Abrollseite) mit Anfasshilfen, so genannten "Tabs" versehen. Diese erleichtern das Abziehen des Liners insofern, als nicht erst zwischen Liner und Klebmasse eingedrungen werden muss, um ein Stück Liner greifen und nachfolgend den Liner weiter abziehen zu können; vielmehr genügt ein Greifen des Tabs, um den Liner problemlos entfernen zu können. Zu diesem Zweck werden die Tabs auf die Linerrückseite derart aufgeschweißt oder angeklebt, dass ein greifbarer Teil des Tabs nicht mit dem Liner verbunden ist, sondern von dessen Oberfläche absteht oder lose auf dieser aufliegt. Derartige Anfasshilfen sind beispielsweise in EP 2 426 185 A1 beschrieben.

Doppelseitige Klebebänder werden bei Bedarf zu einer kreuzgewickelten Langrolle, auch Spule genannt, aufgewickelt und daher bei ihrer Herstellung und Lagerung auf einer Seite häufig mit einem weiteren Releaseliner versehen. Dieser häufig als "Hilfsliner" oder auch als "Interliner" bezeichnete weitere Releaseliner weist gegenüber der Breite des Klebebandes in der Regel beiderseits einen Überstand auf und kann daher u.a. ein Miteinanderverkleben der Seitenkanten des aufgewickelten Klebebandes, auch Verblocken genannt, verhindern.

Der erfindungsgemäße Haftklebestreifen kann auch ein doppelseitiges Klebeband darstellen, das eine erfindungsgemäße Haftklebmasseschicht SK1, wie vorstehend definiert, und eine hitzeaktivierbare Klebstoffschicht umfasst, wobei die Haftklebmasseschicht mit einem Releaseliner abgedeckt ist. Derartige doppelseitige Klebebänder mit einer hitzeaktivierbaren Klebstoffschicht werden in der Regel zu einer wie zuvor beschriebenen kreuzgewickelten Langrolle bzw. Spule aufgewickelt, wobei in der Regel der Interliner auf der Seite der hitzeaktivierbaren Schichte vorliegt.

Als Produktaufbauten sind hinsichtlich des Haftklebestreifens verschiedene denkbar. Stets ist zumindest eine Schicht SK1 einer erfindungsgemäßen selbstklebenden Masse vorhanden. Die Schicht SK1 kann dabei eine Dicke von 15 bis 5000 µm, vorzugsweise 50 bis 3000 µm, bevorzugter 100 µm bis 2000 µm, noch bevorzugter 150 µm bis 2000 µm, noch bevorzugter 400 bis 1500 µm, insbesondere 400 bis 900 µm, wie zum Beispiel 500 bis 800 µm aufweist. Im Haftklebestreifen können weitere Schichten enthalten sein wie z.B. weitere Klebeschichten. Darüber hinaus können nichtklebrige Schichten, worunter insbesondere wenig dehnbare (εₘₐₓ < 100 %) oder dehnbare (εₘₐₓ mindestens 100 %) Trägerschichten zu verstehen sind, im Haftklebestreifen enthalten sein.

Der erfindungsgemäße Releaseliner weist vorzugsweise eine ausgewogene Balance zwischen Festigkeit und Flexibilität auf. Zum einen soll er mit seiner Festigkeit einem Überdehnen bzw. Verstrecken des Klebebands bei der Verarbeitung und Applizierung entgegenwirken, zum anderen aber auch noch flexibel genug sein, um das Klebeband mit dem Releaseliner auch in Kurvenform noch ohne Faltenbildung applizieren zu können. Vorzugsweise ist der Releaseliner außerdem auch bei erhöhten Temperaturen formstabil. Dies ermöglicht es unter anderem, den Releaseliner mit einer im Hotmelt-Verfahren verarbeiteten Haftklebmasse unmittelbar nach der Verarbeitung zu beschichten, ohne dass es zu nachteiligen Formveränderungen des Releaseliners kommt, d.h. ein solcher Releaseliner ist direkt beschichtbar. Einen solchen Releaseliner zur Verwendung auf Haftklebmassen stellt beispielsweise ein Releaseliner dar, der folgende Schichten umfasst:
- eine außen liegende Silikon-Releaseschicht (SR),
- eine Lage (POL), die in jeder ihrer Schichten zu insgesamt mindestens 50 Gew.-%, jeweils bezogen auf das Gesamtgewicht der Schicht, ein oder mehrere Polyolefine enthält, wobei die Lage (POL) zu mindestens 60 Gew.-%, bezogen auf das Gesamtgewicht der Lage (POL), Polypropylen enthält, und
- eine außen liegende Schicht (PER), die zu mindestens 80 Gew.-%, bezogen auf das Gesamtgewicht der Schicht (PER), Polyethylen enthält,wobei die Schicht (PER) durch einen Klebstoff mit der im Aufbau des Releaseliners nächstfolgenden Schicht verbunden ist.

Vorzugsweise ist der Releaseliner zudem mit einer Anfasshilfe versehen und kann mittels dieser problemlos von der Klebmasse abgezogen werden. Beispielsweise lassen sich an den erfindungsgemäßen Releaseliner optional ein oder mehrere Anfasser-Tabs, z.B. aus einem PET/PE- oder einem Aluminium/PET/PE-Verbund, thermisch anschweißen. Ein solcher Liner lässt sich anschließend problemlos von Haftklebmassen abziehen, ohne dass der Verbund aus Anfasser und Liner oder der Schichtverbund des Liners dadurch beeinträchtigt wird.

Liegt der Diblock-Gehalt innerhalb der Elastomerkomponente unterhalb 50 %, dann sind auch Produkte zugänglich, insbesondere Transfertapes, die sich durch dehnendes Verstrecken aus einer Klebefuge oder von einer Oberfläche im Wesentlichen rückstandsfrei wieder ablösen lassen. Zum Stand der Technik im Hinblick auf durch dehnendes Verstrecken wieder ablösbare Produkte wird auf WO 2017/064167 A1 und darin aufgeführte Dokumente verwiesen.

### 2. Herstellung des Haftklebestreifens:

Die Herstellung des erfindungsgemäßen Haftklebestreifens wie in Anspruch 1 definiert kann sowohl aus der Lösung, als auch aus der Schmelze erfolgen. Das Aufbringen der erfindungsgemäß einsetzbaren Selbstklebemasse SK1 auf einen Liner kann dabei durch direkte Beschichtung oder durch Laminierung, insbesondere Heißlaminierung erfolgen. In einem beispielhaften Lösungsmittelverfahren zur Herstellung eines erfindungsgemäßen Transfertapes, d.h. eines Haftklebestreifen aus einer einzigen Selbstklebemasseschicht SK1, werden alle Bestandteile der Klebemasse in einem Lösemittelgemisch wie zum Beispiel Benzin/Toluol/Aceton aufgelöst. Die Mikroballons werden, sofern welche eingesetzt werden sollen, typischerweise in Benzin angeschlämmt und in die gelöste Klebemasse eingerührt. Hierzu können grundsätzlich die bekannten Compoundier- und Rühreinheiten eingesetzt werden, wobei darauf zu achten ist, dass die Mikroballons bei der Vermischung noch nicht expandieren. Sobald die Mikroballons homogen in der Lösung verteilt sind, kann die Klebemasse beschichtet werden, wobei wiederum Beschichtungssysteme gemäß des Standes der Technik eingesetzt werden können. Beispielsweise kann die Beschichtung durch einen Rakel auf einen konventionellen PET-Liner geschehen. Im nächsten Schritt wird die beschichtete Klebemasse beispielsweise bei 100 °C für 15 min getrocknet. Die Trocknungstemperatur wird insbesondere niedriger als die Expansionstemperatur gewählt, um die Expansion der Mikroballons bei der Trocknung zu vermeiden. In keinem der vorgenannten Schritte kommt es daher zu einer Expansion der Mikroballons. Nach dem Trocknen wird die Klebeschicht mit einer zweiten Lage Liner, wie zum Beispiel PET-Liner eingedeckt und in einem passenden Temperatur-Zeit-Fenster, beispielsweise für 5 min bei 150 °C oder für 1 min bei 170 °C, im Ofen geschäumt, und zwar abgedeckt zwischen den zwei Linern, um eine besonders glatte Oberfläche zu erzeugen.

Alternativ kann die Herstellung eines erfindungsgemäßen Transfertapes aus der Schmelze erfolgen. Mit den erfindungsgemäßen Hotmeltverfahren sind alle vorbekannten und in der Literatur beschriebenen Komponenten von Klebemassen, insbesondere selbstklebende, lösemittelfrei verarbeitbar. Nachfolgend werden beispielhaft einige Hotmeltverfahren zur Herstellung eines erfindungsgemäßen Transfertapes vorgestellt, wobei das erfindungsgemäße Transfertape jeweils mit Mikroballons geschäumt ist.

So umfasst die Erfindung ein Verfahren zur Herstellung eines erfindungsgemäßen Transfertapes, wobei
- die Bestandteile zur Bildung einer Klebemasse wie Polymere, Harze oder Füllstoffe und nicht expandierte Mikroballons in einem ersten Mischaggregat gemischt werden und unter Überdruck auf Expansionstemperatur erhitzt werden,
- die Mikroballons beim Austritt aus dem Mischaggregat expandiert werden,
- die Klebemassemischung mitsamt der expandierten Mikroballons in einem Walzenauftragswerk zu einer Schicht ausgeformt wird,
- die Klebemassemischung mitsamt der expandierten Mikroballons gegebenenfalls auf ein bahnförmiges Releasematerial aufgebracht wird.

Ebenfalls erfindungsgemäß ist ein Verfahren zur Herstellung eines erfindungsgemäßen Transfertapes, wobei
- die Bestandteile zur Bildung einer Klebemasse wie Polymere, Harze und gegebenenfalls Füllstoffe in einem ersten Mischaggregat vermischt werden und nicht expandierte Mikroballons, und gegebenenfalls auch Füllstoffe, in einem zweiten Mischaggregat gemischt werden und im zweiten Mischaggregat unter Überdruck auf Expansionstemperatur erhitzt werden,
- die Mikroballons beim Austritt aus dem Mischaggregat expandiert werden,
- die Klebemassemischung mitsamt der expandierten Mikroballons in einem Walzenauftragswerk zu einer Schicht ausgeformt wird,
- die Klebemassemischung mitsamt der expandierten Mikroballons gegebenenfalls auf ein bahnförmiges Releasematerial aufgebracht wird.

Besonders bevorzugt ist ein Verfahren, bei dem eines der Aggregate ein Planetwalzenextruder ist, der insbesondere auch mit mindestens einer Entgasungsvorrichtung in Form eines gasdurchlässigen Seitenarmextruders ausgerüstet ist. Optional und bevorzugt hat der Planetwalzenextruder eine weitere zusätzliche Entgasungsvorrichtung stromaufwärts der ersten Entgasungsvorrichtung am Zugabeort der Bestandteile zur Bildung der Klebemasse. Überraschend ist, dass ein solches Aggregat Vorteile bietet bei der Verarbeitung von Block-Copolymeren, wie beispielsweise Styrol-Block-Copolymeren (SBCs). Block-Copolymere erweichen oberhalb der Schmelz- bzw. Erweichungstemperatur ihrer Hartblöcke und besitzen dann eine niedrige Viskosität, so dass eine Entgasung im stark verflüssigten Zustand nicht naheliegend erscheint, da ein übermäßiger Austritt aus dem Seitenarmextruder zu erwarten ist. Überraschenderweise bietet der Planetwalzenextruder mit Entgasungsvorrichtung aber genug Kühlleistung an, um dennoch Block-Copolymere wie Styrol-Block-Copolymere in einem einzelnen Planetwalzenextruder zu compoundieren und zu entgasen. Als besonders bevorzugt stellt sich dabei ein Verfahren heraus, bei dem in einer ersten Verfahrenszone eine Temperatur der Wandung oberhalb der Schmelz- bzw. Erweichungstemperatur (gemessen mittels DSC) der Styrol-Blöcke eingestellt wird, und in einer folgenden mindestens zweiten Zone eine Temperatur unterhalb der Schmelz- bzw. Erweichungstemperatur der Styrol-Blöcke eingestellt wird. Die Temperatur der Zentralspindel kann dabei geeignet gewählt werden, liegt aber meistens zwischen diesen Temperaturen oder unterhalb der Schmelz- bzw. Erweichungstemperatur der Styrol-Blöcke. Es ist naheliegend, dass dieses Verfahren auch für andere aber vergleichbare Block-Copolymere mit Hartblock-Weichblock-Architektur geeignet ist, solange der Hartblock erweichbar bzw. schmelzbar ist. Besonders geeignet ist dieses Verfahren dann, wenn der Anteil solcher Block-Copolymere mindestens 35 Gew.-% an der Klebmasseformulierung beträgt, und ganz besonders bevorzugt mindestens 40 Gew.-%, und/oder mindestens ein klebrigmachendes Harz enthalten ist.

Besonders bevorzugt ist also ein Verfahren zur Herstellung einer Klebemasse, vorzugsweise einer Haftklebemasse, wie insbesondere einer selbstklebenden Masse wie in Anspruch 1 definiert, basierend auf Block-Copolymeren mit Hartblock-Weichblock-Architektur, bei dem
- die Hartblöcke bei einer Temperatur T erweichbar bzw. schmelzbar sind (gemessen mittels DSC),
- wobei das Verfahren auf einem Planetwalzenextruder durchgeführt wird, und
- wobei in einer ersten Verfahrenszone des Planetwalzenextruders eine Temperatur der Wandung oberhalb der Schmelz- bzw. Erweichungstemperatur T der Hartblöcke eingestellt wird, und
- in einer folgenden mindestens zweiten Verfahrenszone eine Temperatur der Wandung unterhalb der Schmelz- bzw. Erweichungstemperatur T der Hartblöcke eingestellt wird, und
- wobei der Planetwalzenextruder stromabwärts der Zugabe der Komponenten der Klebemasse eine Entgasungsvorrichtung in Form eines gasdurchlässigen Seitenarmextruders aufweist.

Besonders bevorzugt ist auch ein Verfahren zur Herstellung einer Klebemasse, vorzugsweise einer Haftklebemasse, wie insbesondere einer selbstklebenden Masse wie in Anspruch 1 definiert, basierend auf Block-Copolymeren mit Hartblock-Weichblock-Architektur, bei dem
- die Hartblöcke bei einer Temperatur T erweichbar bzw. schmelzbar sind (gemessen mittels DSC),
- wobei das Verfahren auf einem Planetwalzenextruder durchgeführt wird, und
- wobei in einer ersten Verfahrenszone des Planetwalzenextruders eine Temperatur der Wandung oberhalb der Schmelz- bzw. Erweichungstemperatur T der Hartblöcke eingestellt wird, und
- wobei vor oder in dieser Zone expandierbare Mikroballons zugegeben werden, welche in dieser Zone aufschäumen, und wobei
- in einer folgenden mindestens zweiten Verfahrenszone eine Temperatur der Wandung unterhalb der Schmelz- bzw. Erweichungstemperatur T der Hartblöcke eingestellt wird, und
- wobei der Planetwalzenextruder stromabwärts der Zugabe der Komponenten der Klebemasse eine Entgasungsvorrichtung in Form eines gasdurchlässigen Seitenarmextruders aufweist.

Insbesondere werden diese vorstehenden Verfahren bevorzugt bei der Herstellung des erfindungsgemäßen Haftklebestreifens in den unterschiedlichen Ausgestaltungen angewendet.

Weiterhin umfasst die Erfindung ein Verfahren zur Herstellung eines erfindungsgemäßen Transfertapes, wobei
- die Bestandteile zur Bildung einer Klebemasse wie Polymere, Harze oder Füllstoffe und nicht expandierte Mikroballons in einem ersten Mischaggregat gemischt werden und auf Expansionstemperatur erhitzt werden,
- die Mikroballons während des Mischens zumindest teilweise expandieren, bevorzugt vollständig expandiert werden,
- die Klebemassemischung mitsamt der expandierten Mikroballons in einem Walzenauftragswerk zu einer Schicht ausgeformt wird,
- die Klebemassemischung mitsamt der expandierten Mikroballons gegebenenfalls auf ein bahnförmiges Releasematerial aufgebracht wird.

Ebenso umfasst die Erfindung ein Verfahren zur Herstellung eines erfindungsgemäßen Transfertapes, wobei
- die Bestandteile zur Bildung einer Klebemasse wie Polymere, Harze oder Füllstoffe mit nicht expandierten Mikroballons in einem ersten Mischaggregat unter Überdruck gemischt werden und auf eine Temperatur unterhalb der Expansionstemperatur der Mikroballons temperiert werden,
- die gemischte, insbesondere homogene Klebemasse aus dem ersten Mischaggregat in ein zweites Aggregat übergeben werden und dann auf Expansionstemperatur erhitzt werden
- die Mikroballons in dem zweiten Aggregat oder beim Austritt aus dem zweiten Aggregat expandiert werden,
- die Klebemassemischung mitsamt der expandierten Mikroballons in einem Walzenauftragswerk zu einer Schicht ausgeformt wird,
- die Klebemassemischung mitsamt der expandierten Mikroballons gegebenenfalls auf ein bahnförmiges Releasematerial aufgebracht wird.

Ebenso betrifft die Erfindung ein Verfahren zur Herstellung eines erfindungsgemäßen Transfertapes, wobei
- die Bestandteile zur Bildung einer Klebemasse wie Polymere, Harze oder Füllstoffe in einem ersten Mischaggregat gemischt werden,
- die gemischte, insbesondere homogene Klebemasse aus dem ersten Mischaggregat in ein zweites Mischaggregat übergeben wird, in das auch die nicht expandierten Mikroballons aufgegeben werden,
- die Mikroballons in dem zweiten Mischaggregat oder beim Austritt aus dem zweiten Mischaggregat expandiert werden,
- die Klebemassemischung mitsamt der expandierten Mikroballons in einem Walzenauftragswerk zu einer Schicht ausgeformt wird,
- die Klebemassemischung mitsamt der expandierten Mikroballons gegebenenfalls auf ein bahnförmiges Releasematerial aufgebracht wird.

In den beschriebenen Hotmeltverfahren zur Herstellung eines erfindungsgemäßen Transfertapes kann die Selbstklebemasseschicht optional mit bahnförmigem Releasematerial, d.h. einem Liner, eingedeckt werden. Vorzugsweise wird die Selbstklebemasseschicht auf beiden Oberflächen mit einem Liner eingedeckt (anschließend wird das Transfertape einer Elektronenstrahlhärtung unterzogen).

Viele Aggregate zur kontinuierlichen Herstellung und Verarbeitung von lösemittelfreien Polymersystemen sind bekannt. Zumeist finden Schneckenmaschinen wie Einschnecken- und Doppelschneckenextruder unterschiedlichster Verfahrenslänge und Bestückung Verwendung. Es werden aber auch kontinuierlich arbeitende Kneter verschiedenster Bauart, zum Beispiel auch Kombinationen aus Knetern und Schneckenmaschinen, oder auch Planetwalzenextruder für diese Aufgabe eingesetzt.

Beispielsweise ist es vorteilhaft, wenn
- das erste Mischaggregat ein kontinuierliches Aggregat ist, insbesondere ein Planetwalzenextruder, ein Doppelschneckenextruder oder ein Stiftextruder,
- das erste Mischaggregat ein diskontinuierliches Aggregat ist, insbesondere ein Z-Kneter oder ein Innenmischer,
- das zweite Mischaggregat ein Planetwalzenextruder, ein Einschnecken- oder Doppelschneckenextruder oder ein Stiftextruder ist und/oder
- das Ausformaggregat, in dem die Klebemasse mitsamt der expandierten Mikroballons zu einer Trägerschicht ausgeformt wird, ein Kalander, ein Walzenauftragswerk oder ein Spalt, gebildet von einer Walze und einem feststehenden Rakel, ist.

Eine optionale Entgasung erfolgt idealerweise unmittelbar vor dem Walzenauftragswerk bei Mischtemperatur und einem Differenzdruck zum Umgebungsdruck von mindestens 200 mbar.

Besonders bevorzugt ist ein solches Verfahren, bei dem das erste Mischaggregat ein Planetwalzenextruder ist und das zweite Mischaggregat ein Doppelschneckenextruder ist.

Besonders vorteilhaft kann es sein, wenn das zweite Mischaggregat nach einem der vorstehenden aufgeführten Verfahren ein Planetwalzenextruder mit Entgasungsvorrichtung in Form eines gasdurchlässigen Seitenarmextruders ist.

Besonders bevorzugt ist ein solches Verfahren, bei dem das erste Mischaggregat ein Planetwalzenextruder ist und das zweite Mischaggregat ein Planetwalzenextruder mit Entgasungsvorrichtung in Form eines gasdurchlässigen Seitenarmextruders ist. Planetwalzenextruder sind seit längerer Zeit bekannt und fanden zuerst Einsatz in der Verarbeitung von Thermoplasten wie zum Beispiel PVC, wo sie hauptsächlich zum Beschicken der Folgeeinheiten wie zum Beispiel Kalander oder Walzwerke verwendet wurden. Durch ihren Vorteil der großen Oberflächenerneuerung für Material- und Wärmeaustausch, mit dem sich die über Friktion eingebrachte Energie rasch und effektiv abführen lässt, sowie der geringen Verweilzeit und des engen Verweilzeitspektrums hat sich ihr Einsatzgebiet in letzter Zeit unter anderem auch auf Compoundierprozesse erweitert, die eine besonders temperaturkontrollierte Fahrweise erfordern.

Planetwalzenextruder gibt es je nach Hersteller in verschiedenen Ausführungen und Größen. Je nach gewünschter Durchsatzleistung liegen die Durchmesser der Walzenzylinder typischerweise zwischen 70 mm und 400 mm.

Planetwalzenextruder haben in der Regel einen Füllteil und einen Compoundierteil.

Der Füllteil besteht aus einer Förderschnecke, auf die sämtliche Feststoffkomponenten kontinuierlich dosiert werden. Die Förderschnecke übergibt das Material dann dem Compoundierteil. Der Bereich des Füllteils mit der Schnecke ist vorzugsweise gekühlt, um Anbackungen von Materialien auf der Schnecke zu vermeiden. Es gibt aber auch Ausführungsformen ohne Schneckenteil, bei denen das Material direkt zwischen Zentral- und Planetenspindeln aufgegeben wird. Für die Wirksamkeit des erfindungsgemäßen Verfahrens ist dies aber nicht von Bedeutung.

Der Compoundierteil besteht aus einer angetriebenen Zentralspindel und mehreren Planetenspindeln, die innerhalb eines oder mehrerer Walzenzylinder mit Innenschrägverzahnung um die Zentralspindel umlaufen. Die Drehzahl der Zentralspindel und damit die Umlaufgeschwindigkeit der Planetenspindeln kann variiert werden und ist damit ein wichtiger Parameter zur Steuerung des Compoundierprozesses.

Die Materialien werden zwischen Zentral- und Planetenspindeln beziehungsweise zwischen Planetenspindeln und Schrägverzahnung des Walzenteils umgewälzt, so dass unter Einfluss von Scherenergie und äußerer Temperierung die Dispergierung der Materialien zu einem homogenen Compound erfolgt.

Die Anzahl der in jedem Walzenzylinder umlaufenden Planetenspindeln kann variiert und somit den Erfordernissen des Prozesses angepasst werden. Die Spindelanzahl beeinflusst das freie Volumen innerhalb des Planetwalzenextruders, die Verweilzeit des Materials im Prozess und bestimmt zudem die Flächengröße für den Wärme- und Materialaustausch. Die Anzahl der Planetenspindeln hat über die eingeleitete Scherenergie Einfluss auf das Compoundierergebnis. Bei konstantem Walzenzylinderdurchmesser lässt sich mit größerer Spindelanzahl eine bessere Homogenisier- und Dispergierleistung beziehungsweise ein größerer Produktdurchsatz erzielen.

Die maximale Anzahl an Planetenspindeln, die sich zwischen Zentralspindel und Walzenzylinder einbauen lässt, ist abhängig vom Durchmesser des Walzenzylinders und vom Durchmesser der verwendeten Planetenspindeln. Bei Verwendung größerer Walzendurchmesser, wie sie zum Erzielen von Durchsatzraten im Produktionsmaßstab notwendig sind, beziehungsweise kleinerer Durchmesser für die Planetenspindeln können die Walzenzylinder mit einer größeren Anzahl an Planetenspindeln bestückt werden. Typischerweise werden bei einem Walzendurchmesser von D = 70 mm bis zu sieben Planetenspindeln verwendet, während bei einem Walzendurchmesser von D = 200 mm zum Beispiel zehn und bei einem Walzendurchmesser von D = 400 mm beispielsweise 24 Planetenspindeln verwendet werden können.

Erfindungsgemäß wird vorgeschlagen, die Beschichtung der optional geschäumten Klebemassen lösungsmittelfrei mit einem Mehrwalzenauftragswerk durchzuführen. Dies können Auftragswerke bestehend aus mindestens zwei Walzen mit mindestens einem Walzenspalt bis zu fünf Walzen mit drei Walzenspalten sein.

Denkbar sind auch Beschichtungswerke wie Kalander (I,F,L-Kalander), so dass die geschäumte Klebemasse beim Durchgang durch einen oder mehrere Walzenspalte auf die gewünschte Dicke ausgeformt wird.

Das bevorzugte 4-Walzenauftragswerk wird gebildet von einer Dosierwalze, einer Rakelwalze, die die Dicke der Schicht auf dem Trägermaterial bestimmt und die parallel zur Dosierwalze angeordnet ist, und einer Übertragungswalze, die sich unterhalb der Dosierwalze befindet. Auf der Auflegewalze, die zusammen mit der Übertragungswalze einen zweiten Walzenspalt bildet, werden die Masse und das bahnförmige Material zusammengeführt.

Um das Übergabeverhalten der ausgeformten Masseschicht von einer auf eine andere Walze zu verbessern, können weiterhin antiadhäsiv ausgerüstete Walzen oder Rasterwalzen zum Einsatz kommen. Um einen hinreichend präzise ausgeformten Klebstofffilm zu erzeugen, können die Umfangsgeschwindigkeiten der Walzen Differenzen aufweisen.

Je nach Art des zu beschichtenden bahnförmigen Trägermaterials kann die Beschichtung im Gleichlauf- oder Gegenlaufverfahren erfolgen.

Das Ausformaggregat kann auch durch einen Spalt gebildet werden, der sich zwischen einer Walze und einem feststehenden Rakel ergibt. Das feststehende Rakel kann ein Messerrakel sein oder eine feststehende (Halb-)Walze.

Das ebenfalls bevorzugte 2-Walzenauftragswerk wird von zwei gleichlaufenden Walzen gebildet, wobei über beide Walzen jeweils eine antiadhäsiv ausgestaltete Folie oder Trennpapier oder andere Release- oder Trägermaterialien zugeführt werden. Die Masse wird dann zwischen diesen Release- oder Trägermaterialien ausgeformt. Beispielsweise können dies silikonisierte 50 µm dicke PET-Folien sein. Die beiden Release- oder Trägermaterialien können gleich oder verschieden sein. In der Regel wird im Beschichtungsspalt eine rotierende Masseflotte ausgebildet. Die Zuführung der Masse in den Walzenspalt kann über eine oder mehrere Rohrzuleitungen erfolgen, welche statisch oder bewegt sind. Die Masse kann auch über eine Vorverteildüse eingebracht werden. Optional wird die Masse mit oder ohne freie Massefahne auf eine der in den Walzenspalt einlaufenden Bahnen abgelegt. Das ausgeformte Produkt kann beidseitig eingedeckt aufgewickelt werden, oder eine der Release- oder Trägermaterialien kann wieder ausgedeckt werden. Diese und weitere Release- oder Trägermaterialien können auch inline ausgetauscht bzw. umgedeckt werden.

### 3. Elektronenstrahlhärtung des Haftklebestreifens:

Anschließend wird der Haftklebestreifen nach Anspruch 1 einer Elektronenstrahlhärtung mit einer Dosis von 10 bis 100 kGy unterzogen, wobei eine Anlage der Firma ELECTRON CROSSLINKING AB (Halmstad, Schweden) verwendet werden kann, bei einer Beschleunigungsspannung von 220 keV (bei Bedarf angepasst an die gewünschte Eindringtiefe und Dichte des Produkts) sowie einer geeigneten Dosis von 10 bis 100 kGy. Es sind somit beispielsweise sowohl Dosen von kleiner 75 kGy, als auch größer 75 kGy denkbar. Typischerweise wird die Selbstklebemasseschicht von beiden Seiten, d.h. symmetrisch, einer Bestrahlung mit Elektronen unterzogen, um eine gleichmäßige Härtung zu gewährleisten. Dies ist insbesondere bei größeren Dicken der zu bestrahlenden Selbstklebemasseschichten von Vorteil. Bei dünnen Mustern mit beispielsweise 50 µm Dicke kann einseitig bestrahlt werden. Vorzugsweise wird vor der Bestrahlung auf der entsprechenden Seite der Liner abgenommen, insbesondere um einen Strahlungsverlust und eine Beschädigung des Liners zu vermeiden. Letztere kann insbesondere dazu führen, dass sich der Liner nach der Bestrahlung nicht mehr von der Selbstklebemasseschicht abziehen lässt. Bei geeigneter technischer Ausführung kann der Bestrahlungsvorgang inline bzw. einschrittig im Herstellprozess erfolgen.

Dementsprechend betrifft die vorliegende Erfindung auch ein Verfahren zur Herstellung eines Haftklebestreifens wie vorstehend definiert, bei dem die selbstklebende Masse aus der Lösung oder aus der Schmelze zu der Schicht SK1 verarbeitet wird, und die Schicht SK1 gegebenenfalls anschließend einer Bestrahlung mit Elektronen unterzogen wird. Das Verfahren kann ohne die Verwendung eines Vernetzungspromotors durchgeführt werden, was die Kosten und die Komplexität bei der Herstellung des erfindungsgemäßen Haftklebestreifens senkt.

### Verwendung des erfindungsgemäßen Haftklebestreifens

Im Gegensatz zum Punktschweißen erlaubt der erfindungsgemäße Haftklebestreifen das einfache Verbinden sowohl von gleichen, als auch von unterschiedlichen Materialien. Beim Verbindung zweier unterschiedlicher Kunststoffe oder anderer Materialien mit verschiedenen Schmelzpunkten durch Schweißen können Schwachpunkte im Material durch Verbrennen auftreten, oder das Fügen ist nicht vollständig, da ein Material nicht genügend in den Schweißpunkt fließt und sich mit dem anderen verbindet. Beim Verbinden mit dem erfindungsgemäßen Haftklebestreifen sind unterschiedliche Materialeigenschaften nicht mehr von Belang.

Der erfindungsgemäße Haftklebestreifen (unbestrahlt oder bestrahlt mit Elektronen) überzeugt beispielsweise neben einer guten Haftung auf polaren Oberflächen insbesondere auch durch eine gute Haftung auf niederenergetischen, d.h. unpolaren Oberflächen (LSE (low surface energy)-Oberflächen). Da hier kein Haftvermittler bzw. Primer nötig ist, kann also ohne Substratvorbehandlung verklebt werden. Er kann somit insbesondere zur Verklebung von unpolaren Oberflächen verwendet werden, d.h. zur Verklebung von Oberflächen mit einer Oberflächenenergie von 50 mN/m oder weniger, vorzugsweise weniger als 40 mN/m, und insbesondere weniger als 35 mN/m. Insbesondere bei Anwendungen im Automobilbereich werden immer häufiger Kunststoffe anstelle von Metallen eingesetzt. Diese besitzen in der Regel eine geringe Oberflächenenergie, die das Verkleben auf diesen Untergründen häufig erschwert. Dem kann durch den erfindungsgemäßen Haftklebestreifen Abhilfe geschaffen werden. Zu den erfindungsgemäß verklebbaren unpolaren Oberflächen zählen beispielsweise solche auf Basis von fluorhaltigen Polymeren wie zum Beispiel Teflon, siliziumorganischen Polymeren, Polyolefinen wie zum Beispiel Polyethylen, Polypropylen, EPDM oder einem Polypropylen-EPDM-Composite, Ethylen-Vinylacetat-Copolymeren, Polyvinylaromaten wie Polystyrol oder Copolymere auf Basis von Styrol (z.B. Styrol-Butadien-Blockcopolymere, AcrylnitrilButadien-Styrol-Copolymere), Polyvinylacetat, Polyacrylaten wie Polymethylmethacrylat, Polycarbonaten, Polyurethanen, Polyamiden, Polyester wie Polyethylenterephthalat, Celluloseacetat, Ethylcellulose oder auf Basis von Polymeren, welche Segmente der vorgenannten Polymere enthalten oder solche auf Basis eines Gemisches vorgenannter Polymere, gegebenenfalls mit weiteren Polymeren. Mit der Formulierung "auf Basis des Polymers" ist in diesem Zusammenhang üblicherweise gemeint, dass überwiegend das besagte Polymer die Funktion des Oberflächenmaterials übernimmt. Typischerweise ist das besagte Polymer im Oberflächenmaterial als einziges Polymer vorgesehen oder jedenfalls aber zu mindestens 50 Gew.-% bezogen auf den Gesamtanteil aller Polymerkomponenten. Harze gelten in diesem Zusammenhang nicht als Polymere. Der Haftklebestreifen eignet sich jedoch auch zum Verkleben von anderen Substraten als Polymermaterial, wie zum Beispiel Glas oder Keramikmaterial, Metall wie zum Beispiel Edelstahl, Metalloxid oder Kombinationen davon. Die Materialien können dabei in reiner Form vorliegen oder mit anderen Materialien geblendet oder gefüllt sein. Ferner kann das Material Recyclingmaterial sein oder ein funktioneller Stoff z.B. zur Erhöhung/Erniedrigung von Leitfähigkeiten oder der Haptik.

Der erfindungsgemäße Haftklebestreifen eignet sich zur dauerhaften Verklebung von zwei Formteilen aus gleichen oder unterschiedlichen Materialien. Es können alle denkbaren Materialien verwendet werden, bevorzugt wie vorstehend aufgeführt. Bevorzugt sind steife Materialien wie Metalle oder Kunststoffe mit einem hohen Steifigkeitsmodul oder auch mit z.B. Glasfasern oder anderen Festigkeitsträgern versteifte Kunststoffe.

Der erfindungsgemäße Haftklebestreifen eignet sich daher für unterschiedlichste industrielle Anwendungen, vorzugsweise wird er für Innenanwendungen eingesetzt, und dabei insbesondere im Bau-, Automobil- oder Elektronikbereich.

Der Haftklebestreifen kann zum Beispiel im Auto-Innenbereich eingesetzt werden, und dabei insbesondere in Türen, wie Innentüren, Cockpits, Mittelkonsolen, Sitzen und anderen Teilen, deren Grundgerüst oder Einzelteile miteinander verbunden werden. Er kann außerdem beispielsweise bei Automobil-Karosserieseiten-Formteilen, Rückspiegeln, Außenverkleidungsteilen, Wetterleisten, Straßenschildern, Handelsschildern, Konstruktionen, Schaltschränken, Schalenformen, Maschinenteilen, Anschlussdosen oder Backsheet-Lösungen für Photovoltaik-Module (d.h. in der Solarzellenindustrie) eingesetzt werden. Ferner kann er zum Verbinden mit Automobil-Klarlackoberflächen verwendet werden, wie insbesondere Klarlacke für Fahrzeuge wie ein Auto. Das Substrat, auf das der Haftklebestreifen aufgebracht werden kann, wird in Abhängigkeit von der jeweiligen Anwendung ausgewählt. Beispielsweise kann der Haftklebestreifen auf Folienprodukte (z.B. dekorative Grafiken und reflektierende Produkte), Etikettenmaterial und Bandträger aufgetragen werden. Ferner kann er direkt auf andere Substrate, wie z. B. eine Metallplatte (z. B. eine Fahrzeugtafel) oder ein Glasfenster aufgebracht werden, so dass noch ein anderes Substrat oder Objekt an der Platte oder dem Fenster angebracht werden kann.

Erfindungsgemäß sind entsprechend Halbzeuge bzw. Anbauteile, die mit einem erfindungsgemäßen Haftklebestreifen ausgerüstet sind. Werden Halbzeuge bzw. Anbauteile entsprechend vorbereitet, dann ist die Integration in den finalen Verklebungsprozess in der Fertigungslinie besonders effizient.

Wenn der Haftklebestreifen auf das Substrat laminiert wird, kann es wünschenswert sein, die Oberfläche des Substrats und/oder des Haftklebestreifens zu behandeln, um die Haftung weiter zu verbessern. Solche Behandlungen werden typischerweise basierend auf der Art der Materialien im Haftklebestreifen und des Substrats ausgewählt und umfassen eine Primerung und Oberflächenmodifikationen, wie z.B. Coronabehandlung und Oberflächenabrieb. Insbesondere können der Haftklebestreifen und/oder die zu verklebenden Oberflächen mit einem Primer beschichtet sein, um eine bessere Haftung des Haftklebestreifens auf den zu verklebenden Oberflächen zu erzielen. Ebenfalls können der Untergrund und/oder der Haftklebestreifen einer Plasmabehandlung unterzogen worden sein. Aufgrund der guten Haftung des erfindungsgemäßen Haftklebestreifens nicht lediglich auf polaren, sondern auch auf unpolaren Oberflächen ist dies jedoch im Allgemeinen nicht erforderlich. Der erfindungsgemäße Haftklebestreifen weist daher den Vorteil auf, dass er typischerweise ohne Verwendung eines Primers zur Verklebung von unterschiedlichen Oberflächen eingesetzt werden kann.

Das Bekleben von Oberflächen, insbesondere niederenergetischen Oberflächen kann unter Verwendung, d.h. mittels, des erfindungsgemäßen Haftklebestreifens überraschenderweise auch bei niedrigen Temperaturen erfolgen, wie zum Beispiel bei einer Temperatur von höchstens 10 °C, vorzugsweise von höchstens 5 °C und insbesondere von höchstens 0 °C. Somit lassen sich mit dem erfindungsgemäßen Haftklebestreifen Oberflächen auch in kalter Umgebung bequem verkleben, beispielsweise in Produktionshallen oder in Werkstätten. Insbesondere können dabei zwei Bauteile verbunden, d.h. verklebt, werden. Vorzugsweise weisen die Bauteile unterschiedliche Oberflächenenergien auf. Die überraschende Eignung zur Verklebung bei tiefen Temperaturen wird in den Beispielen ausgeführt.

Gegenstand der Erfindung ist ferner ein Verfahren zum Verbinden von Bauteilen, bei dem die Bauteile mechanisch verbunden, wie zum Beispiel verschweißt, werden und gleichzeitig mittels eines erfindungsgemäßen Haftklebestreifens verklebt werden.

Aufgrund der guten Anschmiegsamkeit des Haftklebestreifens ist er besonders geeignet, um über Stufen, Schweißnähte und andere Topologien verklebt zu werden. Aufgrund der hohen Sofortklebkraft und des guten Widerstands gegen Ablösen kann auch über solchen Oberflächentopologien eine sichere Verklebung erreicht werden.

Weiterhin weist der erfindungsgemäße Haftklebestreifen eine sehr hohe Zug-, Zugscher- und Stirnzugfestigkeit auf. Beispielsweise kann in einer Zug- oder Scherprüfung zweier 3 mm dicker PP/EPDM Prüfuntergründe, welche mit dem erfindungsgemäßen Haftklebestreifen verklebt sind, der Prüfuntergrund verformt oder zerstört werden, bevor ein Bruch der Verklebung auftritt.

Neben der Verklebung von unpolaren Substraten oder Lacken ist das erfindungsgemäße Klebeband insbesondere auch geeignet zur Verklebung von mit Öl verunreinigten Substraten wie beispielsweise Metallblechen. Besonders wichtig ist hierbei, dass auf so kritischen Untergründen keine Einschränkung der Klebkraft vorliegt und deswegen eine Vernetzung des Klebebands nicht naheliegend oder machbar erscheint. Gleichzeitig muss in der Regel bei konstruktivem Verkleben von beispielsweise Metallblechen eine hohe Wärmescherfestigkeit vorliegen. Die überraschende Eignung zur Verklebung auf geölten Blechen wird in den Beispielen ausgeführt.

Eine weitere bevorzugte Möglichkeit ist die Verklebung zweier Bauteile, die zusätzliche positioning pins innerhalb der Formteile aufweisen, aber über das Klebeband zusammengehalten werden.

Die sehr schnelle Initialhaftung des Klebebands auf verschiedenen Untergründen, sogar auf niederenergetischen Oberflächen, ermöglicht eine schnelle automatisierte Applikation auch auf Kunststoffen. Solche Kunststoffe kommen insbesondere im Auto-Innenbereich vor, und insbesondere in Türen, wie Innentüren, Cockpits, Mittelkonsolen, Sitze und andere Teile, deren Grundgerüst oder Einzelteile miteinander verbunden werden. Das Klebeband eignet sich auch zum Verkleben von Anbau- oder Dekorteilen, die innen oder außen im Auto angebracht werden. Typischerweise wird dabei ein Kunststoffteil mit einer lackierten Oberfläche verbunden, wie zum Beispiel ein EPDM-Anbauteil mit einem niederenergetischen Klarlack auf einem Metallblech.

### Figur

Anhand der nachfolgend beschriebenen Figur wird eine besonders vorteilhafte Ausführung der Erfindung näher erläutert, ohne damit die Erfindung unnötig einschränken zu wollen.

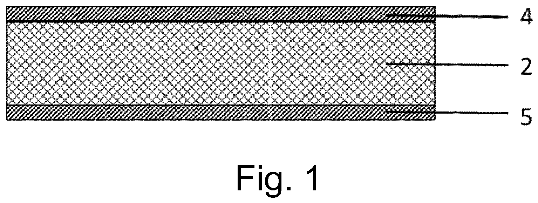

In Figur 1 ist der schematische Aufbau eines erfindungsgemäßen einschichtigen Haftklebestreifens bestehend aus einer Schicht 2 als Querschnitt dargestellt.

Der Streifen umfasst eine selbstklebende Klebemassenschicht 2 (Schicht SK1). Die selbstklebende Klebemassenschicht 2 (Schicht SK1) ist in der dargestellten beispielhaften Ausführung jeweils mit einem Liner 4, 5 eingedeckt.

Nachfolgend wird die Erfindung durch Beispiele näher erläutert. Anhand der nachfolgend beschriebenen Beispiele werden besonders vorteilhafte Ausführungen der Erfindung näher erläutert, ohne damit die Erfindung unnötig einschränken zu wollen.

### Beispiele

Die eingesetzten Rohstoffe sind wie folgt charakterisiert:
- Kraton^{®} D1101:: Styrol-Butadien-Styrol-Triblockcopolymer der Firma Kraton Polymers mit 16 Gew.-% Diblock, Blockpolystyrolgehalt: 31 Gew.-%, Anteil an 1,2-verknüpftem konjugiertem Dien im Butadienblock: 10 Gew.-%
- Kraton^{®} D1118:: Styrol-Butadien-Styrol-Triblockcopolymer der Firma Kraton Polymers mit 78 Gew.-% Diblock, Blockpolystyrolgehalt: 33 Gew.-%, Anteil an 1,2-verknüpftem konjugiertem Dien im Butadienblock: 10 Gew.-%
- Dercolyte A115:: festes α-Pinen-Klebharz mit einer Ring und Ball-Erweichungstemperatur von 115 °C und einem DACP von 35 °C
- Piccolyte^{®} A25:: Polyterpenharz auf der Basis von α-Pinen mit einer Ring und Ball-Erweichungstemperatur von 22 bis 28 °C.
- Escorez 2203:: Kohlenwasserstoffharz auf C5- und C9-Basis mit geringem Aromatenanteil, Erweichungspunkt (Ring & Ball) 95 °C.
- Expancel 920 DU40, Expancel 920 DU80:: unexpandierte Mikroballons.
- Ebecryl 140:: Di(trimethylolpropan)tetraacrylat

Tabelle 1 zeigt die Zusammensetzung der eingesetzten Klebemasserezepturen.

**Tabelle 1: Zusammensetzung der eingesetzten Klebemasserezepturen (Angaben in Gewichtsteilen).**

| | R1 | R2 | R3 | R4 |
|---|---|---|---|---|
| Kraton D 1101 | 25 | 25 | 20 | 20 |
| Kraton D 1118 | 25 | 25 | 30 | 30 |
| Escorez 2203 | | | 50 | |
| Dercolyte A115 | 50 | 48 | | 50 |
| Piccolyte A25 | | 2 | | |
| Expancel 920DU40 | 3 | 3 | | |
| Expancel 920DU80 | | | 3 | 3 |

### Verfahren V1 (Lösungsmittelverfahren):

Hierzu wurde zuerst eine 40 Gew.-%ige Klebelösung in Benzin/Toluol/Aceton hergestellt von der jeweils angegebenen Rezeptur. Die Gewichtsanteile der gelösten Bestandteile beziehen sich dabei jeweils auf das Trockengewicht der resultierenden Lösung.

Die Lösung wurde anschließend bei Bedarf mit unexpandierten Mikroballons versetzt, wobei die Mikroballons als Anschlämmung in Benzin eingesetzt wurden. Der Gewichtsanteil der Mikroballons bezieht sich auf das Trockengewicht der eingesetzten Lösung, zu der sie gegeben wurden (d.h. das Trockengewicht der eingesetzten Lösung wird als 100% festgesetzt). Die erhaltene Mischung wurde dann mit einem Streichbalken auf einen PET-Liner, ausgerüstet mit einem trennenden Silikon, in der gewünschten Schichtdicke ausgestrichen, anschließend wurde bei 100 °C für 15 min das Lösungsmittel abgedampft und so die Masseschicht getrocknet. Daraufhin wurde auf die freie Oberfläche der hergestellten und getrockneten Klebmassenschicht ein zweiter derartiger PET-Liner kaschiert und die Klebemassenschicht anschließend für 5 min bei 150 °C zwischen den beiden Linern im Ofen geschäumt, so dass ein etwa 100 µm dicker erfindungsgemäßer Haftklebestreifen erhalten wurde. Bei Bedarf wurde durch mehrfache Lamination dieser Schicht die Zieldicke hergestellt. Durch Ausstanzen wurden die gewünschten Abmessungen erhalten.

### Verfahren V2 (Hotmelt-Verfahren):

Zugabe der Elastomerkomponenten erfolgte im Einzug des PWE (Planetwalzenextruder), welcher einen Einzugsbereich und zwei Verfahrensteile umfasste. Die Anlaufringe hatten in Verfahrensrichtung einen zunehmenden Durchmesser. Obwohl unterschiedliche Spindelbestückungen geeignet waren, wurden Bestückungen bevorzugt, welche im ersten Verfahrensteil mindestens ¾ der maximalen Bestückungszahl betrugen. Die Harzkomponenten wurden aufgeschmolzen und im zweiten Verfahrensteil des PWE zugegeben. Besonders geeignet zur Herstellung von homogenen Mischungen war ein Harz-Split, in dem ein Teil des Harzes im ersten Verfahrensteil zugegeben wurde und der Rest downstream im zweiten Verfahrensteil. Besonders geeignet war dabei die Zugabe beider Anteile flüssig über Sidefeed oder Anlaufringe, wobei der erste Anteil ca. 10% der gesamten Harzmenge beträgt, und soweit nicht anders angegeben wurde das Verfahren so ausgeführt. Geeignet wäre auch die Zugabe des ersten Harzanteils fest im Einzug des PWE oder über Sidefeed im ersten Verfahrensteil. Die compoundierte Masse wurde über einen geheizten Schlauch in den Doppelschneckenextruder übergeben.

Mikroballons wurden über einen Sidefeed im ersten Drittel des DSE (Doppelschneckenextruder) zugegeben und dort aufgeschäumt, so dass die Schäumung im Wesentlichen vor Austritt aus dem Aggregat beendet war. Durch Friktionswärme lag die Massetemperatur im DSE stets über den eingestellten Wandungstemperaturen. Am Ende des DSE war an einer geeigneten Stelle ein Vakuum angelegt. Die Masseaustrittstemperatur betrug ca. 130°C. Die Masse wurde dann über eine Vorverteildüse (Kleiderbügeldüse) in einen Zweiwalzen-Kalander übergeben und zwischen zwei beidseitig silikonisierten 50 µm PET-Folien ausgeformt. Durch dieses vorteilhafte Verfahren konnten stets Rauigkeiten Rₐ < 5 µm erreicht werden (gemessen mittels Weißlichtinterferometrie).

Tabelle 2 zeigt die Parameter des Hotmelt-Verfahrens.

**Tabelle 2: Parameter des Hotmelt-Verfahrens (L/D = Länge / Durchmesser).**

| | |
|---|---|
| Durchsatz Summe Elastomerkomponenten | 20 kg/h |
| Durchmesser Walzenzylinder | 70 mm |
| Temp. PWE Zentralspindel | 50 °C |
| Temp. PWE Zonen | 90 °C / 90 °C / 90 °C / 90 °C |
| PWE Drehzahl | 100 /min |
| Durchmesser DSE-Schnecken und L/D | 42 mm, 36 L/D |
| Temp. DSE Zonen | 20 °C / 50 °C / 80 °C / 80 °C |
| DSE Drehzahl | 100 /min |
| Vakuum DSE | 200 mbar |
| Temp. Kalanderwalzen | 120 °C / 120 °C |

Im Folgenden wird die Herstellung eines erfindungsgemäßen Haftklebestreifens beschrieben, der aus einer einzigen geschäumten Selbstklebemasseschicht SK1 besteht (Transfertape), die auf mit Mikroballons geschäumtem Vinylaromatenblockcopolymer basiert. Die Selbstklebemasseschicht SK1 kann ohne Verwendung eines Weichharzes hergestellt werden (Beispiel B1), oder unter Verwendung eines solchen Harzes (Beispiel B2). Beispiel B3 entspricht B2, jedoch hergestellt mit dem Hotmelt-Verfahren V2. Beispiel B4 entspricht B3, jedoch mit dem Harz Escorez 2203 und einer anderen Elastomermischung. Beispiel B5 entspricht B3, jedoch mit einer anderen Elastomermischung, siehe auch die nachstehenden Erläuterungen.

Tabelle 3 gibt eine Übersicht über die Beispiele B1 bis B5 als Kombination unterschiedlicher Rezepturen und Verfahren.

**Tabelle 3: Übersicht über die in den Beispielen B1 bis B5 eingesetzten Rezepturen sowie Herstellungsverfahren.**

| Beispiel | Rezeptur | Verfahren |
|---|---|---|
| B1 | R1 | V1 |
| B2 | R2 | V1 |
| B3 | R2 | V2 |
| B4 | R3 | V2 |
| B5 | R4 | V2 |

Anschließend erfolgte jeweils wie beschrieben die Bestrahlung der Selbstklebemasseschicht SK1 mit Elektronen.

### Beispiel B1:

Der Haftklebestreifen wurde nach dem Verfahren V1 unter Verwendung der Rezeptur R1 hergestellt, und zwar so, dass er eine Dicke von etwa 1000 µm aufweist. Die Dicke bezieht sich stets auf den Haftklebestreifen ohne PET-Liner.

### Beispiel B2:

Die Herstellung des Haftklebestreifens aus Beispiel B2 unterscheidet sich von der Herstellung des Haftklebestreifens aus Beispiel B1 lediglich dadurch, dass die eingesetzte 40 Gew.-%ige Klebelösung ferner 2 Gew.-% Piccolyte^{®} A25 enthält, bezogen auf das Trockengewicht der resultierenden Lösung.

### Beispiele B3 - B5:

Beispiel B3 wurde mit der Rezeptur von B2 hergestellt, jedoch mit dem Hotmelt-Verfahren V2. Die Beispiele B4 und B5 wurden wie B3 hergestellt, jedoch mit den Rezepturen, welche in Tabelle 3 angegeben sind.

### Bestrahlung mit Elektronen der Beispiele B1 bis B5:

Die Selbstklebemasseschicht SK1 des Haftklebestreifens aus Beispiel B1-B5 wurde anschließend einer Elektronenstrahlhärtung unterzogen, wobei eine Anlage der Firma ELECTRON CROSSLINKING AB (Halmstad, Schweden) verwendet wurde. Die Beschleunigungsspannung betrug 220 keV. Die Dosis wurde jeweils im Bereich von 10 bis 100 kGy in Schritten von 10 kGy variiert. Die Selbstklebemasseschicht wurde dabei jeweils von beiden Seiten, d.h. symmetrisch, der Bestrahlung mit Elektronen unterzogen, um eine gleichmäßige Härtung zu gewährleisten. Vor der Bestrahlung wurde jeweils auf der zu bestrahlenden Seite der Liner abgenommen. Es wurde stets auch ein unbestrahltes Referenzmuster hergestellt.

### Ergebnisse zu den Beispielen B1 bis B5:

### Beispiel 1:

Der den angegebenen Dosen an Elektronenstrahlung unterzogene Haftklebestreifen (enthaltend kein Weichharz) aus Beispiel B1 wurde jeweils mittels des Statischen Schertests auf seine Wärmescherstandszeit überprüft (Abmessung des Probestreifens: 25 mm Länge, 25 mm Breite, Messtemperatur: 80 °C, Belastung 500g). Ohne Elektronenbestrahlung betrug diese bereits mehr als 2.000 min, bei einer Strahlendosis von 40 bzw. 60 kGy etwa 2.600 min, bei einer Strahlendosis von 80 kGy etwa 8.000 min und bei einer Strahlendosis von 100 kGy war der Probestreifen auch nach 10.000 min noch nicht abgeschert. Die Wärmescherstandszeit konnte also mit zunehmender Bestrahlungsintensität erhöht werden, es ergaben sich (auch ohne zusätzlichen Vernetzungspromotor) sehr gute Wärmescherstandszeiten. Der Gelanteil der Selbstklebemasseschicht SK1 wurde bei allen Bestrahlungsintensitäten zu jeweils 0 Gew.-% bestimmt, d.h. eine makroskopische Vernetzung konnte nicht festgestellt werden.

Die Klebkraft des unbestrahlten Haftklebestreifens betrug etwa 28 N/cm. Die Klebkraft (sowie auch die Zugfestigkeit) des Haftklebestreifens blieb außerdem bei Bestrahlung mit Elektronen (unterschiedlicher Dosis) im Wesentlichen unverändert.

### Beispiel 2:

Der den angegebenen Dosen an Elektronenstrahlung unterzogene Haftklebestreifen (enthaltend Piccolyte^{®} A25 als Weichharz) aus Beispiel B2 wurde ebenfalls jeweils mittels des Statischen Schertests auf seine Wärmescherstandszeit überprüft (Abmessung des Probestreifens: 13 mm Länge, 20 mm Breite, Messtemperatur: 70 °C, Belastung 500g). Ohne Elektronenbestrahlung betrug diese bereits etwa 3.400 min. Bereits ab einer Strahlendosis von 10 kGy (und bis zu einer Strahlendosis von 100 kGy) war der Probestreifen auch nach 10.000 min noch nicht abgeschert. Der Rutschweg des Prüfmusters nach 10.000 min betrug beispielsweise bei einer Strahlendosis von 10 kGy, 20 kGy, 30 kGy bzw. 40 kGy 4,8 mm, 2,8 mm, 2,7 mm bzw. 2,0 mm. Die Wärmebeständigkeit konnte also im Fall eines Haftklebestreifens enthaltend Weichharz mit zunehmender Bestrahlungsintensität erhöht werden, und es ergaben sich (auch ohne zusätzlichen Vernetzungspromotor) sehr gute Wärmebeständigkeiten. Der Gelanteil der Selbstklebemasseschicht SK1 wurde dabei zu jeweils 0 Gew.-% bestimmt, d.h. eine makroskopische Vernetzung konnte nicht festgestellt werden. Die Verwendung von Weichharz steht daher der Erzielung von hohen Wärmebeständigkeiten nicht entgegen.

Die Klebkraft des unbestrahlten Haftklebestreifens betrug etwa 34 N/cm, d.h. sie konnte durch die Verwendung von Weichharz erhöht werden. Die Klebkraft (sowie auch die Zugfestigkeit) des Haftklebestreifens blieben außerdem bei Bestrahlung mit Elektronen (unterschiedlicher Dosis) im Wesentlichen unverändert.

### Beispiel B3:

Beispiel B3 wurde ausgeprüft wie Beispiel B2. Der Gelanteil wurde auch nach ESH-Bestrahlung mit den angegeben Dosen zu jeweils 0 Gew.-% bestimmt. Ohne ESH-Bestrahlung betrug die Wärmescherstandszeit im Statischen Schertest bei 70°C 4000 min. Ab einer Dosis von 20kGy betrug die Scherstandszeit >10.000 min.

### Beispiel B4:

Beispiel B4 wurde ausgeprüft wie Beispiel B2. Der Gelanteil wurde auch nach ESH-Bestrahlung mit den angegeben Dosen zu jeweils 0 Gew.-% bestimmt. Ohne ESH-Bestrahlung betrug die Wärmescherstandszeit im Statischen Schertest bei 70°C 1200 min. Ab einer Dosis von 20kGy betrug die Scherstandszeit >10.000 min.

### Beispiel B5:

Beispiel B5 wurde ausgeprüft wie Beispiel B2. Der Gelanteil wurde auch nach ESH-Bestrahlung mit den angegeben Dosen zu jeweils 0 Gew.-% bestimmt. Ohne ESH-Bestrahlung betrug die Wärmescherstandszeit im Statischen Schertest bei 70°C 5400 min. Ab einer Dosis von 20kGy betrug die Scherstandszeit >10.000 min.

### Beispiele 6 bis 8 (inklusive Ergebnisse):

Im Folgenden wird die Herstellung einer erfindungsgemäßen geschäumten Selbstklebemasseschicht SK1 mit ca. 500 µm Dicke beschrieben, welche in den Beispielen B6 - B8 mit der Rezeptur R1 nach dem Hotmelt-Verfahren V2 hergestellt wurden. Diese Beispiele enthielten den jeweils in der Tabelle 4 angegebenen Anteil an Vernetzungspromotor Ebecryl 140. Die Beispiele B6 - B8 wurden jeweils mit und ohne Bestrahlung mit Elektronen hergestellt, wie in der Tabelle 4 angegeben.

**Tabelle 4: Übersicht über die Beispiele 6 bis 8 (inklusive Ergebnisse). SSZ = Scherstandszeit. KK = Klebkraft.**

| | Basis-Rezeptur | Vernetzungspromotor | Herstell-Verfahren | ESH Dosis [kGy, bei 170kV] | SSZ 70°C [min] | KK 90° ASTM [N/cm] | Gelwert |
|---|---|---|---|---|---|---|---|
| B6 | R1 | 0% | V2 | 0 | 4592 | 22,7 | 0% |
| B6 | R1 | 0% | V2 | 50 | 10.000 | 17,3 | 0% |
| B7 | R1 | 1% | V2 | 0 | 3564 | 20,8 | 0% |
| B7 | R1 | 1% | V2 | 50 | 10.000 | 13,0 | 1,5% |
| B8 | R1 | 3% | V2 | 0 | 460 | 18,6 | 0% |
| B8 | R1 | 3% | V2 | 50 | 10.000 | 11,2 | 11% |

In dieser Tabelle sieht man, dass eine hohe Scherstandzeit bei 70°C mittels ESH auch ohne Vernetzungspromotor erreicht werden kann, und darüber hinaus der Einsatz des Vernetzungspromotors nachteilig ist, da selbst bei niedrigen Gelwerten (11% oder weniger) die Klebkraft merklich gesenkt wird. Die erfindungsgemäßen Haftklebemassen weisen somit nach der ESH-Behandlung vorzugsweise einen Gelwert von 0% auf. Insbesondere erreicht bei der erfindungsgemäßen ESH-Behandlung ohne Vernetzungspromotor die Klebkraft nach ESH-Behandlung mindestens 75% des Ausgangswerts ohne ESH-Behandlung, und/oder die Dosis der ESH-Behandlung wird so ausgewählt, dass die Klebkraft nach ESH-Behandlung mindestens 75% des Ausgangswerts ohne ESH-Behandlung erreicht.

### Verklebung auf geölten Untergründen:

Zur Überprüfung der Eignung zur Verklebung auf geölten Untergründen wurden die Klebebänder wie in Tabelle 5 angegeben auf Stahlblechen mit 4 g/m² Öl (Quaker 61AUS) verklebt. Vergleichsklebeband 1 ist ein 500 µm dickes doppelseitiges Acrylatklebeband, hergestellt nach dem Beispiel MT15 aus DE 10 2009 048036 A1. Vergleichsklebeband 2 ist das kommerziell erhältliche Produkt tesa^{©} 4954, d.h. ein ca. 430 µm dickes doppelseitiges Klebeband mit Naturkautschukklebemassen.

Man kann erkennen, dass das erfindungsgemäße Klebeband nach Beispiel B6 (jedoch mit 20 kGy Bestrahlungsintensität hergestellt) eine hervorragende Klebkraft auf dem verölten Untergrund besitzt.

**Tabelle 5: Klebkraft auf geöltem Untergrund.**

| | Klebkraft 90° [N/cm] | | |
|---|---|---|---|
| Aufziehzeit [min] | Vergleichsklebeband 1 | Vergleichsklebeband 2 | B6 mit ESH 20 kGy |
| 2 | 0,02 | 0,23 | 0,80 |
| 60 | 0,05 | 0,77 | 3,85 |
| 240 | 0,24 | 1,30 | 9,23 |

### Verklebung bei tiefen Temperaturen:

Zur Überprüfung der Eignung zur Verklebung bei tiefen Temperaturen wurden die Klebebänder wie in Tabelle 6 angegeben bei 0 °C auf ASTM Stahl verklebt. Vergleichsklebeband 1 ist ein 500 µm dickes doppelseitiges Acrylatklebeband, hergestellt nach dem Beispiel MT15 aus DE 10 2009 048036 A1. Die Klebkräfte wurden wie in den Prüfmethoden beschrieben gemessen, außer dass die Aufziehzeit und die Messung jeweils bei 0 °C erfolgten.

Man kann erkennen, dass das erfindungsgemäße Klebeband nach Beispiel B5 eine hervorragende Klebkraft bei 0 °C besitzt.

**Tabelle 6: Verklebung bei 0 °C.**

| | Klebkraft 90° [N/cm], gemessen bei 0°C | |
|---|---|---|
| Aufziehzeit bei 0°C | Vergleichsklebeband 1 | B5 mit ESH 20 kGy |
| 2 min | 1 | 31 |
| 24 h | 19 | 37 |

### Prüfmethoden

Alle Messungen wurden, sofern nichts anderes angegeben ist, bei 23 °C und 50 % rel. Luftfeuchtigkeit durchgeführt.

Die mechanischen und klebtechnischen Daten wurden wie folgt ermittelt:

### DACP

In ein trockenes Probenglas werden 5,0 g Testsubstanz (das zu untersuchende Klebharzmuster) eingewogen und mit 5,0 g Xylol (Isomerengemisch, CAS [1330-20-7], ≥ 98,5%, Sigma-Aldrich #320579 oder vergleichbar) versetzt. Bei 130 °C wird die Testsubstanz gelöst und sodann auf 80 °C abgekühlt. Etwaig entwichenes Xylol wird durch weiteres Xylol aufgefüllt, so dass wieder 5,0 g Xylol vorhanden sind. Anschließend werden 5,0 g Diacetonalkohol (4-Hydroxy-4-methyl-2-pentanon, CAS [123-42-2], 99%, Aldrich #H41544 oder vergleichbar) zugegeben. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Fa. Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der DACP-Wert desto höher ist die Polarität der Testsubstanz.

### Klebharzerweichungstemperatur

Die Erweichungstemperatur eines Klebharzes wird nach der einschlägigen Methodik bestimmt, die als Ring & Ball bekannt ist und nach ASTM E28 standardisiert ist.

### Durchmesser

Die Bestimmung des mittleren Durchmessers der von den Mikroballons gebildeten Hohlräume in einer Selbstklebemasseschicht erfolgt anhand von Kryobruchkanten des Haftklebestreifens im Rasterelektronenmikroskop (REM) bei 500-facher Vergrößerung. Es wird von den auf REM-Aufnahmen von 5 verschiedenen Kryobruchkanten des Haftklebestreifens zu sehenden Mikroballons der zu untersuchenden Selbstklebemasseschicht jeweils grafisch der Durchmesser ermittelt, wobei das arithmetische Mittel aller in den 5 REM-Aufnahmen ermittelten Durchmesser den mittleren Durchmesser der von den Mikroballons gebildeten Hohlräume der Selbstklebemasseschicht im Sinne der vorliegenden Anmeldung darstellt. Die Durchmesser der auf den Aufnahmen zu sehenden Mikroballons werden graphisch derart ermittelt, dass aus den REM-Aufnahmen für jeden einzelnen Mikroballon der zu untersuchenden Selbstklebemasseschicht dessen maximale Ausdehnung in beliebiger (zweidimensionaler) Richtung entnommen wird und als dessen Durchmesser angesehen wird.

### Dichte

Die Dichte einer Klebemasseschicht wird ermittelt durch Quotientenbildung aus Masseauftrag und Dicke der auf einen Träger oder Liner aufgetragenen Klebemassenschicht.

Der Masseauftrag kann durch Bestimmung der Masse eines bezüglich seiner Länge und seiner Breite definierten Abschnitts einer solchen auf einen Träger oder Liner aufgetragenen Klebemassenschicht bestimmt werden, abzüglich der (bekannten oder separat ermittelbaren) Masse eines Abschnitts gleicher Dimensionen des verwendeten Trägers bzw. Liners.

Die Dicke einer Klebemasseschicht kann durch Bestimmung der Dicke eines bezüglich seiner Länge und seiner Breite definierten Abschnitts einer solchen auf einen Träger oder Liner aufgetragenen Klebemassenschicht bestimmt werden, abzüglich der (bekannten oder separat ermittelbaren) Dicke eines Abschnitts gleicher Dimensionen des verwendeten Trägers bzw. Liners. Die Dicke der Klebemasseschicht lässt sich über handelsübliche Dickenmessgeräte (Taster-Prüfgeräte) mit Genauigkeiten von weniger als 1 µm Abweichung ermitteln. In der vorliegenden Anmeldung wird das Präzisions-Dickenmessgerät Mod. 2000 F eingesetzt, das einen kreisrunden Taster mit einem Durchmesser von 10 mm (plan) aufweist. Die Messkraft beträgt 4 N. Der Wert wird 1 s nach Belastung abgelesen. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

### Dicke

Wie bereits die Dicke einer Klebemasseschicht lässt sich auch die Dicke eines Haftklebestreifens bzw. einer Folienträgerschicht oder Liners über handelsübliche Dickenmessgeräte (Taster-Prüfgeräte) mit Genauigkeiten von weniger als 1 µm Abweichung ermitteln. In der vorliegenden Anmeldung wird das Präzisions-Dickenmessgerät Mod. 2000 F eingesetzt, das einen kreisrunden Taster mit einem Durchmesser von 10 mm (plan) aufweist. Die Messkraft beträgt 4 N. Der Wert wird 1 s nach Belastung abgelesen. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

### Statische Glasübergangstemperatur T_{g}, Schmelztemperatur, Erweichungstemperatur

Glasübergangspunkte - synonym als Glasübergangstemperaturen bezeichnet - insbesondere von Polymeren bzw. Polymerblöcken werden angegeben als Ergebnis von Messungen mittels Dynamischer Differenzkalorimetrie DDK (englisch Dynamic Scanning Calorimetry; DSC) gemäß der DIN 53 765, insbesondere Abschnitte 7.1 und 8.1, jedoch mit einheitlichen Heiz- und Kühlraten von 10 K/min in allen Heiz- und Kühlschritten (vergleiche DIN 53 765; Abschnitt 7.1; Anmerkung 1). Die Probeneinwaage beträgt 20 mg. Auch die Schmelztemperatur bzw. Erweichungstemperatur von Polymeren bzw. Polymerblöcken wird auf diese Weise ermittelt.

### Anteil an 1,2-verknüpftem konjugiertem Dien

Der Anteil an 1,2-verknüpftem konjugiertem Dien im B-Block von Vinylaromatenblockcopolymer kann mittels ¹H-NMR bestimmt werden. Zur spektroskopischen Untersuchung wurde folgendes Gerät verwendet: ¹H-NMR: Bruker AMX 500 (500.14 MHz). Als Standard diente das Lösungsmittelsignal δ (CHCl3) =7.24]. Die chemischen Verschiebungen sind immer in ppm angegeben. Die Kopplungskonstanten J sind in Hertz [Hz] angegeben. Die Signalmuster werden wie folgt angegeben: s (Singulett), bs (breites Singulett), d (Dublett), dd (Dublett vom Dublett), t (Triplett), q (Quintett), m (Multiplett).

### Oberflächenenergien

Oberflächenenergien (Oberflächenspannungen) werden nach DIN ISO 8296 bestimmt. Hierfür lassen sich zum Beispiel Testtinten der Firma Softal einsetzen. Die Tinten sind im Bereich von 30 bis 72 mN/m erhältlich. Die Tinte wird bei 23 °C und 50% rel. Luftfeuchtigkeit mit einem Tintenstrich auf die Oberfläche aufgetragen. Zieht sich der Tintenstrich in weniger als 2 Sekunden zusammen, wird die Messung mit Tinte mit niedrigerer Oberflächenenergie wiederholt, bis die 2 Sekunden erreicht sind. Bleibt der Tintenanstrich länger als 2 Sekunden unverändert, wird die Messung mit Tinte mit höherer Oberflächenenergie wiederholt, bis die 2 Sekunden erreicht sind. Der auf der passenden Tintenflasche angegebene Wert entspricht dann dem der Oberflächenenergie des Substrats.

### Wärmescherstandszeit - Statischer Schertest SSZ

Zur Ermittlung der Wärmescherstandszeit, auch Wärmescherfestigkeit genannt, wird ein Haftklebestreifen in einem auf 70 °C oder 80 °C temperierten Klimaschrank auf einen vorgegebenen, starren Haftuntergrund (hier Stahl) aufgebracht und einer konstanten Scherbelastung ausgesetzt. Ermittelt wird die Haltedauer in Minuten. Die verwendeten Temperaturen sind in den Beispielen angegeben.

Ein doppelseitig klebender Streifen mit 13 mm Länge und 20 mm Breite oder mit 25 mm Länge und 25 mm Breite des zu prüfenden Haftklebestreifens wird auf einem an einem Ende gelochten, polierten Stahlplättchen (Prüfuntergrund) händisch appliziert. Anschließend wird ein identisches Stahlplättchen in umgekehrter Orientierung händisch appliziert. Der resultierende Verbund wird mit 100 N/cm² für 60 Sekunden verpresst (bei der Geometrie 20 x 13 mm beträgt die Kraft 0,260 kN, bei der Geometrie 25 x 25 mm beträgt die Kraft 0,625 kN.

Die Aufziehzeit zwischen Anrollen und Belastung soll 24 h betragen, soweit in den Beispielen nicht anders angegeben. Vor Belastung wird die Probe 15 Minuten im Wärmeschrank temperiert. Das Gewicht wird anschließend mit Hilfe von S-förmigen Haken angehängt, und betrug 500g sofern nicht anders angegeben. Die verwendeten Belastungen in kPa bzw N/cm² Verklebungsfläche sind in den Beispielen angegeben.

Eine automatische Zähleruhr ermittelt nun den Zeitpunkt des Abscherens der Prüfmuster. Die Messung wird nach 10.000 min abgebrochen. Bei Prüfmustern, die nach 10.000 min noch nicht abgefallen sind, lässt sich die Güte der kohäsiven Eigenschaften in der Wärme ferner durch Bestimmung des Rutschwegs oder der Auslenkung ohne Rutschen des Prüfmusters nach 10.000 min mittels Wegmessfühler quantifizieren.

Es wird der Mittelwert aus drei Messungen ermittelt.

### 90° Klebkraft (KK)

Soweit nicht anders angegeben, erfolgt die Bestimmung der Klebkraft 90° auf Stahl, bei einem Prüfklima von 23 °C +/- 1 °C Temperatur und 50 % +/- 5 % rel. Luftfeuchte. Die Muster werden auf 20 mm Breite zugeschnitten und auf den (Stahluntergrund geklebt. Der Untergrund wird, wenn nicht anders angegeben, vor der Messung gereinigt und konditioniert. Dazu wird die Platte zunächst mit Aceton abgewischt und danach 5 Minuten an der Luft liegen gelassen, damit das Lösungsmittel abdampfen kann. Die dem Prüfuntergrund abgewandte Seite des Haftklebebands wird dann mit einer 50 µm Aluminiumfolie abgedeckt, wodurch verhindert wird, dass sich das Muster bei der Messung dehnt. Danach erfolgt das Anrollen des Prüfmusters auf den Prüfuntergrund. Hierzu wird das Tape mit einer 2 kg Rolle fünfmal hin und her, bei einer Aufrollgeschwindigkeit von 10 m/min, überrollt. Unmittelbar nach dem Anrollen wird der Untergrund in eine spezielle Halterung geschoben, die es ermöglicht, das Muster in einem Winkel von 90° senkrecht nach oben abzuziehen. Die Klebkraftmessung erfolgt mit einer Zwick-Zugprüfmaschine. Die Messergebnisse sind in N/cm angegeben und sind gemittelt aus drei Messungen.

### Bestimmung des Gelanteils

Die sorgfältig getrockneten lösungsmittelfreien Klebstoffproben werden in ein Vliestütchen aus Polyethylen (Tyvek-Vlies) eingeschweißt. Aus der Differenz der Probengewichte vor und nach Extraktion durch ein Gemisch aus Benzin /Toluol/Aceton wird der Gelwert, also der nicht im Gemisch lösliche Gewichtsanteil des Polymers, bestimmt. Additive, die auch nach ESH-Bestrahlung nicht in das Netzwerk eingebaut sind, müssen vom Gesamtprobengewicht vor der Extraktion subtrahiert werden.

## Patentansprüche

1. Haftklebestreifen, der mindestens eine Schicht SK1 aus einer selbstklebenden Masse umfasst, die auf Vinylaromatenblockcopolymer basiert und Klebharz enthält, wobei die mindestens eine Schicht SK1 aus der selbstklebenden Masse zu 20 bis 60 Gew.-% mindestens ein Klebharz, bezogen auf das Gesamtgewicht der Selbstklebemasseschicht, enthält,
wobei es sich beim Klebharz der Schicht SK1 zu mindestens 75 Gew.-% um Kohlenwasserstoffharz oder Terpenharz oder eine Mischung dergleichen handelt, wobei das Vinylaromatenblockcopolymer
• ein Gemisch aus linearen Blockcopolymeren ist.
• mindestens einen Polymerblock A enthält, der überwiegend durch Polymerisation von Vinylaromaten gebildet ist, und
• gleichzeitig mindestens einen Polymerblock B enthält, der überwiegend durch Polymerisation von konjugierten Dienen gebildet ist, wobei der Anteil an 1,2-verknüpftem konjugiertem Dien, bestimmt mittels der angegebenen Prüfmethode für ¹H-NMR, im B-Block weniger als 30 Gew.-% beträgt, und
• zumindest die Schicht SK1 einer Bestrahlung mit Elektronen mit einer Dosis von 10 bis 100 kGy unterzogen worden ist,
**dadurch gekennzeichnet, dass**
die selbstklebende Masse der Schicht SK 1 geschäumt ist.

2. Haftklebestreifen nach einem der vorhergehenden Ansprüche, **dadurch gekennzeichnet, dass** die absolute Dichte der Selbstklebemasseschicht SK1 400 bis 990 kg/m³ beträgt.

3. Haftklebestreifen nach zumindest einem der Ansprüche 1 oder 2, **dadurch gekennzeichnet, dass** der Anteil an Mikroballons in der geschäumten Schicht SK1 bis zu 12 Gew.-% beträgt, bezogen auf die Gesamtzusammensetzung der Schicht.

4. Verfahren zur Herstellung eines Haftklebestreifens nach Anspruch 1 bis 3, bei dem die selbstklebende Masse aus der Lösung oder aus der Schmelze zu der Schicht SK1 verarbeitet wird und die Schicht SK1 einer Bestrahlung mit Elektronen unterzogen wird.

5. Verwendung eines Haftklebestreifens nach einem der Ansprüche 1 bis 3 zur Verklebung von Oberflächen mit einer Oberflächenenergie, ermittelt nach DIN ISO 8296, von 50 mN/m oder weniger.

6. Verwendung eines Haftklebestreifens nach einem der Ansprüche 1 bis 3 zum Verbinden von zwei Oberflächen, wobei eine der Oberflächen eine Oberflächenenergie, ermittelt nach DIN ISO 8296, von 50 mN/m oder weniger hat und die andere Oberfläche eine Oberflächenenergie von 35 mN/m oder mehr hat.

7. Verwendung eines doppelseitigen Haftklebestreifens nach einem der Ansprüche 1 bis 3 zum Verkleben von zwei Bauteilen, wobei das Verkleben bei einer Temperatur von höchstens 10 °C stattfindet und wobei die Bauteile unterschiedliche Oberflächenenergien aufweisen.

8. Verwendung eines Haftklebestreifens nach einem der Ansprüche 1 bis 3 in einem Verfahren zum Verbinden von Bauteilen, bei dem die Bauteile gleichzeitig mechanisch verbunden werden und mittels des Haftklebestreifens verklebt werden.

9. Verwendung eines Haftklebestreifens nach einem der Ansprüche 1 bis 3 zum Verkleben von mit Öl verunreinigten Substraten.

## Claims

1. Pressure-sensitive adhesive strip containing at least one layer SK1 of a self-adhesive composition based on vinylaromatic block copolymer and containing tackifying resin, wherein the at least one layer SK1 of the self-adhesive composition contains 20% to 60% by weight of at least one tackifying resin, based on the total weight of the self-adhesive composition layer, where the tackifying resin of layer SK1 comprises, to an extent of at least 75% by weight, hydrocarbon resin or terpene resin or a mixture of these, where the vinylaromatic block copolymer
• is a mixture of linear block copolymers,
• contains at least one polymer block A formed predominantly by polymerization of vinylaromatics, and
• simultaneously contains at least one polymer block B formed predominantly by polymerization of conjugated dienes, where the proportion of 1,2-bonded conjugated diene, determined by the test method specified for ¹H NMR, in the B block is less than 30% by weight, and
• at least layer SK1 has been subjected to irradiation with electrons with a dose of 10 to 100 kGy,
**characterized in that**
the self-adhesive composition of layer SK1 has been foamed.

2. Pressure-sensitive adhesive strip according to either of the preceding claims, **characterized in that** the absolute density of the self-adhesive composition layer SK1 is 400 to 990 kg/m³.

3. Pressure-sensitive adhesive strip according to at least one of Claims 1 and 2, **characterized in that** the proportion of microballoons in the foamed layer SK1 is up to 12% by weight, based on the overall composition of the layer.

4. Process for producing a pressure-sensitive adhesive strip according to Claims 1 to 3, in which the self-adhesive composition is processed from solution or from the melt to give layer SK1, and layer SK1 is subjected to irradiation with electrons.

5. Use of a pressure-sensitive adhesive strip according to any of Claims 1 to 3 for bonding of surfaces having a surface energy, determined to DIN ISO 8296, of 50 mN/m or less.

6. Use of a pressure-sensitive adhesive strip according to any of Claims 1 to 3 for bonding of two surfaces, where one of the surfaces has a surface energy, determined to DIN ISO 8296, of 50 mN/m or less and the other surface has a surface energy of 35 mN/m or more.

7. Use of a double-sided pressure-sensitive adhesive strip according to any of Claims 1 to 3 for bonding of two components, where the bonding takes place at a temperature of not more than 10°C and where the components have different surface energies.

8. Use of a pressure-sensitive adhesive strip according to any of Claims 1 to 3 in a method of bonding components, in which the components are simultaneously mechanically bonded and adhesive-bonded by means of the pressure-sensitive adhesive strip.

9. Use of a pressure-sensitive adhesive strip according to any of Claims 1 to 3 for bonding of oil-contaminated substrates.

## Revendications

1. Bande auto-adhésive, qui comprend au moins une couche SK1 en une masse auto-adhésive, qui est à base d'un copolymère séquencé vinylaromatique et contient une résine adhésive, l'au moins une couche SK1 de la masse auto-adhésive contenant 20 à 60 % en poids d'au moins une résine adhésive, par rapport au poids total de la couche de masse auto-adhésive,
la résine adhésive de la couche SK1 consistant à hauteur d'au moins 75 % en poids en une résine hydrocarbonée ou une résine terpénique ou un mélange de celles-ci, le copolymère séquencé vinylaromatique
• étant un mélange de copolymères séquencés linéaires,
• contenant au moins une séquence polymère A, qui est principalement formée par polymérisation de composés vinylaromatiques, et
• contenant simultanément au moins une séquence polymère B, qui est principalement formée par polymérisation de diènes conjugués, la proportion de diène conjugué à liaison 1,2, déterminée au moyen de la méthode d'essai indiquée pour la RMN ¹H, dans la séquence B étant inférieure à 30 % en poids, et
• au moins la couche SK1 ayant été soumise à un rayonnement électronique à une dose de 10 à 100 kGy,
**caractérisée en ce que**
la masse auto-adhésive de la couche SK 1 est moussée.

2. Bande auto-adhésive selon l'une quelconque des revendications précédentes, **caractérisée en ce que** la densité absolue de la couche de masse auto-adhésive SK1 est de 400 à 990 kg/m³.

3. Bande auto-adhésive selon au moins l'une quelconque des revendications 1 ou 2, **caractérisée en ce que** la proportion de microballons dans la couche SK1 moussée est de jusqu'à 12 % en poids, par rapport à la composition totale de la couche.

4. Procédé de fabrication d'une bande auto-adhésive selon les revendications 1 à 3, dans lequel la masse auto-adhésive est transformée à partir de la solution ou de la masse fondue en la couche SK1 et la couche SK1 est soumise à un rayonnement électronique.

5. Utilisation d'une bande auto-adhésive selon l'une quelconque des revendications 1 à 3 pour coller des surfaces ayant une énergie de surface, déterminée selon la norme DIN ISO 8296, de 50 mN/m ou moins.

6. Utilisation d'une bande auto-adhésive selon l'une quelconque des revendications 1 à 3 pour relier deux surfaces, l'une des surfaces ayant une énergie de surface, déterminée selon la norme DIN ISO 8296, de 50 mN/m ou moins et l'autre surface ayant une énergie de surface de 35 mN/m ou plus.

7. Utilisation d'une bande auto-adhésive double face selon l'une quelconque des revendications 1 à 3 pour coller deux composants, le collage ayant lieu à une température d'au plus 10 °C et les composants présentant des énergies de surface différentes.

8. Utilisation d'une bande auto-adhésive selon l'une quelconque des revendications 1 à 3 dans un procédé de liaison de composants, dans lequel les composants sont simultanément reliés mécaniquement et collés au moyen de la bande auto-adhésive.

9. Utilisation d'une bande auto-adhésive selon l'une quelconque des revendications 1 à 3 pour coller des substrats contaminés par de l'huile.
